# EUROPEAN PATENT SPECIFICATION

(11) **EP 3 640 079 B1**
(45) Date of publication and mention of the grant of the patent: **04.05.2022**
(21) Application number: 18835256.1
(22) Date of filing: 01.06.2018
(51) Int. Cl.: B60L 50/16, B60W 30/192, B60K 6/485, B60W 10/02, B60W 10/08, B60W 10/06, B60W 20/19, B62M 23/02, F02D 29/02, B60W 30/18, F02N 11/08, B62M 7/02, F02B 61/02, F02N 11/04

(54) **VEHICLE**
FAHRZEUG
VÉHICULE

(30) Priority: 18.07.2017 JP 2017138886
(43) Date of publication of application: 22.04.2020
(73) Proprietor: Yamaha Hatsudoki Kabushiki Kaisha, Iwata-shi, Shizuoka 438-8501 (JP)
(72) Inventor: MURAYAMA, Takuji, Iwata-shi Shizuoka 438-8501 (JP); KOSUGI, Makoto, Iwata-shi Shizuoka 438-8501 (JP); MATSUMOTO, Kuniaki, Iwata-shi Shizuoka 438-8501 (JP); OBA, Tatsuhiro, Iwata-shi Shizuoka 438-8501 (JP)
(74) Representative: Zimmermann, Tankred Klaus
(86) International application number: PCT/JP2018/021149
(87) International publication number: WO 2019/017087

(56) References cited:
- EP-A1- 3 064 763
- JP-A- H11 336 581
- JP-A- H11 336 581
- JP-A- 2006 054 940
- JP-A- 2014 189 254
- JP-A- 2015 074 296
- JP-A- 2017 036 665

## Description

### Technical Field

The present teaching relates to a vehicle.

### Background Art

In Patent Literature 1 (PTL 1), for example, a vehicle including an AC generator is shown as a vehicle including an engine.

In Patent Literature 2 (PTL 2), for example, a vehicle is shown including an internal combustion engine as an engine and a starter generator as a motor generator that transmits and receives power to and from an output shaft of the internal combustion engine. The single starter generator functions both as a starter for starting the internal combustion engine and as a generator for generating electricity by being driven by the internal combustion engine after starting the internal combustion engine. PTL 2 proposes a technique of using the starter generator for a purpose other than as the starter and the generator, for example, for the purpose of assisting the internal combustion engine. The starter generator according to PTL 2, for example, assists the internal combustion engine in a direction of increasing the rotation speed of the internal combustion engine in a situation where the vehicle is accelerated by a user operating an accelerator grip.

For example, Patent Literature 3 (PTL 3) shows a vehicle including an electric motor that also functions as a generator. The electric motor according to PTL 3, for example, electrically assists an engine after starting the engine when the throttle opening degree is a predetermined opening degree or more (at a time of accelerating, traveling uphill, or the like).

In the vehicles according to PTLs 2 and 3, a reduction in the fuel injection amount with an acceleration performance maintained is attempted by assisting the engine at a time of accelerating the vehicle.

JP H11 336581 A discloses a control device for a hybrid car.

### Citation List

### Patent Literature

PTL 1: Japanese Patent No. 5711604
PTL 2: Japanese Patent No. 5874314
PTL 3: Japanese Patent Application Laid-Open No. 2015-074296

### Summary of Invention

The invention is set forth in the independent claims. Preferred embodiments are defined by the dependent claims.

### Technical Problem

For a vehicle including a magnet type motor generator, it is desired that the vehicle moves forward with an increased responsiveness to a departure operation.

An object of the present teaching is to enable a vehicle including a magnet type motor generator to move forward with an increased responsiveness to a departure operation.

### Solution to Problem

The present inventors carried out detailed studies about assist from a magnet type motor generator in enabling forward movement with an increased responsiveness to a departure operation.

Conventionally, driving with a magnet type motor generator is considered as an additional function auxiliary to basic driving with an engine. A vehicle including an engine and a magnet type motor generator, therefore, is considered to be driven mainly by the engine. Thus, a conventional vehicle assisted by a magnet type motor generator is designed based on an idea that: first, an engine transitions from a state where the rotation speed is low and rotation is unstable to a state where power that stabilizes the rotation can be outputted; and then the magnet type motor generator additionally works, which means that assist is given.

The state where power that stabilizes the engine rotation can be outputted may be, for example, reaching a rotation speed at which a crank shaft and a transmission shaft come into a connected state in the vehicle of PTL 1. Such a rotation speed is, specifically, 2500 to 3000 rpm. Here, the rotation speed at which the crank shaft and the transmission shaft come into the connected state is higher than 1500 rpm which is an idling rotation speed of the vehicle.

As described above, a main design idea for a conventional vehicle is on the assumption that traveling is caused by engine driving with assist given from a magnet type motor generator. Designing such a vehicle involves an issue about at which timing in increasing the engine rotation speed the magnet type motor generator starts assisting.

The design idea described above faces difficulties in enabling the vehicle to move forward with a largely increased responsiveness to a departure operation, that is to an accelerating operation.

The present inventors fundamentally reviewed the design idea for a vehicle, in order to obtain a new design idea different from the conventional design idea that adopts engine driving for traveling with assist given from a magnet type motor generator.

In a vehicle, driven members such as wheels make the vehicle move forward based on power of a crankshaft. When viewed from the crankshaft which drives the driven members, the crankshaft can be driven by a plurality of power sources. Even though different types of power sources are used for driving, power for the crankshaft to drive the driven members does not differ in itself. For example, when the driven members are driven by power of the crankshaft, the power that drives the driven members does not differ by whether the crankshaft is rotated by an engine or by a magnet type motor generator. That is, the level of power for the crankshaft to drive the driven members may vary, but it makes no difference in the fact that the power is power.

The present inventors studied an attempt to lower a rotation speed of the crankshaft at which power transmission between the crankshaft and the driven members is allowed. Typically, it is considered that allowing power transmission between the crankshaft and the driven members when the crankshaft has a low rotation speed puts an increased load on engine rotation and therefore makes the engine rotation unstable. The present inventors, however, positively attempted to transmit power at a low rotation speed. The present inventors also attempted to cause the magnet type motor generator to drive the crankshaft at a low rotation speed.

The motor has a property that the lower its rotation speed is, the lower an induced voltage which hinders reception of electricity is. Thus, the motor has a property that the lower its rotation speed is, the more power the motor outputs. The magnet type motor generator that functions as a motor is, therefore, capable of outputting a higher torque in a relatively low rotation speed range as compared to a relatively high rotation speed range.

Power transmission between the crankshaft and the driven members is allowed at a low rotation speed, and the magnet type motor generator applies a high torque to the crankshaft at a low rotation speed. This enables the vehicle to move forward with an increased responsiveness to an accelerating operation.

The present teaching is accomplished based on the findings described above, and a vehicle according to an aspect of the present teaching has the following configurations.

(1)A vehicle of the present invention includes:
an engine including a crankshaft, the engine being configured to output power through the crankshaft;
a magnet type motor generator including a rotor and a stator, the rotor including a permanent magnet and being connected to the crankshaft such that power transmission between the rotor and the crankshaft is allowed without interposition of a clutch and such that the rotor rotates with a fixed speed ratio relative to the crankshaft, the stator being arranged opposed to the rotor, the magnet type motor generator being configured to rotate the crankshaft at least when starting a combustion action of the engine and to generate electricity when being driven by the engine;
an electricity storage device configured to supply and receive electricity to and from the magnet type motor generator;
an accelerator operator configured to be operated so as to instruct the engine to make an output;
a driven member configured to be driven by power outputted from the engine to make the vehicle move forward;
a power transmission device configured to transmit power from the crankshaft to the driven member, the power transmission device including a clutch; and
a control section (60) configured to energize the magnet type motor generator to rotate the crankshaft, and to supply a fuel to the engine to start the combustion action of the engine while the crankshaft (15) is rotating,
the vehicle is configured to lean into turns,
the vehicle is configured to, when taking a turn, lean toward the inside of a curve in order to oppose a centrifugal force acting on the vehicle at a time of the turn,
the power transmission device is configured to disconnect power transmission when a rotation speed of the crankshaft is in a low-speed region less than 2000 rpm then allowing power transmission between the crankshaft and the driven member before a rotation speed of the crankshaft reaches 2000 rpm when the rotation speed of the crankshaft is out of the low-speed region during an increase in the rotation speed of the crankshaft independent of a driver's operation on the clutch, the low-speed region having an upper limit value that corresponds to a clutch-in rotation speed in the clutch, wherein
when the rotation speed of the crankshaft is zero, the engine is stopped and no power transmission is performed by the power transmission device, and if, in this state, the accelerator operator is operated to instruct the engine to make an output, the control section is configured to control the magnet type motor generator to start rotating the crankshaft using electricity from the electricity storage device with the combustion action of the engine, wherein
the magnet type motor generator is configured to provide a torque to the crankshaft for increasing the rotation speed of the crankshaft, and
before the rotation speed of the crankshaft reaches 2000 rpm, the control section is configured to supply a fuel to the engine and starts the combustion action of the engine, and
the driven member is configured to be driven by power of the crankshaft caused by combustion of the engine before the rotation speed of the crankshaft reaches 2000 rpm during an increase in the rotation speed of the crankshaft.

In the vehicle of (1), power transmission between the rotor and the crankshaft is performed without interposition of a clutch such that the rotor rotates with a fixed speed ratio relative to the crankshaft. Thus, the power transmission between the rotor and the crankshaft is not disconnected. The vehicle of (1) includes such a power transmission system.

In the vehicle of (1), in response to the accelerator operator being operated so as to instruct the engine to make an output in a state where the combustion action of the engine is stopped, the magnet type motor generator causes the crankshaft to rotate using electricity in the electricity storage device with the combustion action of the engine stopped. The crankshaft rotates with a fixed speed ratio relative to the rotor of the magnet type motor generator. In the magnet type motor generator, the lower the rotation speed is, the lower an induced voltage is, which hinders reception of electricity from the electricity storage device. Accordingly, in a state where the crankshaft is stopped and in a state after the crankshaft starts rotating, the magnet type motor generator is likely to receive a large amount of electricity from the electricity storage device. This enables the magnet type motor generator to rotate the crankshaft with large power.

Before the rotation speed of the crankshaft reaches 2000 rpm during an increase in the rotation speed of the crankshaft, a fuel is supplied to the engine and the combustion action of the engine is started. A transmission start rotation speed is a rotation speed before reaching 2000 rpm. The transmission start rotation speed means a rotation speed of the crankshaft at which the power transmission device starts power transmission between the crankshaft and the driven member during an increase in the rotation speed of the crankshaft. Before the rotation speed of the crankshaft reaches 2000 rpm during an increase in the rotation speed of the crankshaft, the driven member is driven by power of the crankshaft caused by combustion of the engine. To be specific, before the rotation speed of the crankshaft reaches, for example, a rotation speed (i.e., 2000 rpm) lower than the lower limit value (i.e., 2500 rpm) of the transmission start rotation speed range (2500 to 3000 rpm) shown in PTL 1, the driven member is driven by power of the crankshaft caused by combustion of the engine. To be more specific, before the rotation speed of the crankshaft reaches, for example, the median (2000 rpm) between the idling rotation speed (1500 rpm) and the lower limit value (2500 rpm) of the transmission start rotation speed range (2500 to 3000 rpm) shown in PTL 1, the driven member is driven by power of the crankshaft caused by combustion of the engine.

Accordingly, the driven member receives power from the crankshaft which is rotated with large power by the magnet type motor generator and which outputs power obtained from the combustion action of the engine, at an earlier timing as compared to the case of PTL 1, for example. Thus, in response to the accelerator operator being operated, power is transmitted to the driven member at an earlier timing. From the state where the combustion action of the engine is stopped, the speed of the vehicle moving forward can be increased at an earlier timing in accordance with an operation on the accelerator operator. This enables the vehicle, including the motor generator, to move forward with an increased responsiveness to a departure operation on the accelerator operator.

(2) Another aspect of the present teaching is the vehicle of (1), wherein
before the rotation speed of the crankshaft reaches 2000 rpm during an increase in the rotation speed of the crankshaft, the driven member is driven by both power of the crankshaft caused by combustion of the engine and power of the crankshaft caused by driving of the magnet type motor generator.

In the vehicle of (2), before the rotation speed of the crankshaft reaches 2000 rpm, the driven member receives not only power caused by combustion of the engine but also power caused by driving of the magnet type motor generator. In the vehicle of (2), a period in which the driven member is driven by both the engine and the magnet type motor generator is present before the rotation speed of the crankshaft reaches 2000 rpm during an increase in the rotation speed of the crankshaft. Thus, power of the magnet type motor generator directly assists the vehicle in moving forward. This enables the forward movement to be performed with a further increased responsiveness to a departure operation on the accelerator operator.

(3) Another aspect of the present teaching is the vehicle of (2), wherein
the power transmission device is configured to allow power transmission between the crankshaft and the driven member after the combustion action of the engine is started during an increase in the rotation speed of the crankshaft and before the rotation speed of the crankshaft reaches 2000 rpm,
in response to the accelerator operator being operated so as to instruct the engine to make an output in a state where the combustion action of the engine is stopped, the control section controls the magnet type motor generator such that the magnet type motor generator causes the crankshaft to rotate using electricity in the electricity storage device with the combustion action of the engine stopped, and before the rotation speed of the crankshaft reaches 2000 rpm, the control section supplies a fuel to the engine and starts the combustion action of the engine, and
the driven member is driven by both power of the crankshaft caused by combustion of the engine and power of the magnet type motor generator, after the combustion action of the engine is started during an increase in the rotation speed of the crankshaft and before the rotation speed of the crankshaft reaches 2000 rpm.

In the vehicle of (3), after the combustion action of the engine is started and before the rotation speed of the crankshaft reaches 2000 rpm, the power transmission device allows power transmission between the crankshaft and the driven member. As a result, the driven member is driven by both power of the crankshaft caused by combustion of the engine and power of the magnet type motor generator. In the vehicle of (3), therefore, in response to the accelerator operator being operated, the combustion action of the engine is started and then power is transmitted to the driven member. This enables the forward movement to be performed with a further increased responsiveness to a departure operation on the accelerator operator.

In the vehicle of (3), the transmission start rotation speed is lower than 2000 rpm. The transmission start rotation speed may be higher than an initial combustion rotation speed and lower than 2000 rpm, and may be lower than the initial combustion rotation speed. In any case, a period in which the power transmission device allows power transmission between the crankshaft and the driven member is present within a period from when the combustion action of the engine is started to when the rotation speed of the crankshaft reaches 2000 rpm.

(4) Another aspect of the present teaching is the vehicle of (3), wherein
the power transmission device is configured to allow power transmission between the crankshaft and the driven member before the combustion action of the engine is started,
in response to the accelerator operator being operated so as to instruct the engine to make an output in a state where the combustion action of the engine is stopped, the control section controls the magnet type motor generator such that the magnet type motor generator causes the crankshaft to rotate using electricity in the electricity storage device with the combustion action of the engine stopped, and before the rotation speed of the crankshaft reaches 2000 rpm during an increase in the rotation speed of the crankshaft, the control section supplies a fuel to the engine and starts the combustion action of the engine, and
the driven member is driven by power of the crankshaft caused by the magnet type motor generator before the combustion action of the engine is started, and is driven by both power of the crankshaft caused by combustion of the engine and power of the magnet type motor generator after the combustion action of the engine is started and before the rotation speed of the crankshaft reaches 2000 rpm.

In the vehicle of (4), before the combustion action of the engine is started, power transmission between the crankshaft and the driven member is performed. Before the combustion action of the engine is started, the driven member is driven by power of the crankshaft caused by the motor generator. This advances a timing when power is transmitted to the driven member in response to the accelerator operator being operated. After the combustion action of the engine is started and before the rotation speed of the crankshaft reaches 2000 rpm, the driven member is driven by both power of the crankshaft caused by combustion of the engine and power of the magnet type motor generator. This enables the forward movement to be performed with a further increased responsiveness to a departure operation on the accelerator operator.

In the vehicle of (4), the transmission start rotation speed is lower than the initial combustion rotation speed. The transmission start rotation speed may be zero rpm. In other words, the power transmission device may be configured to be always capable of power transmission between the crankshaft and the driven member irrespective of the rotation speed of the crankshaft.

(5) Another aspect of the present teaching is the vehicle of any one of (1) to (4), wherein
the power transmission device is configured to allow power transmission between the crankshaft and the driven member before the rotation speed of the crankshaft reaches an idling over-rotation speed during an increase in the rotation speed of the crankshaft, the idling over-rotation speed being higher than an idling rotation speed and lower than 2000 rpm,
in response to the accelerator operator being operated so as to instruct the engine to make an output in a state where the combustion action of the engine is stopped, the control section controls the magnet type motor generator such that the magnet type motor generator causes the crankshaft to rotate using electricity in the electricity storage device with the combustion action of the engine stopped, and before the rotation speed of the crankshaft reaches the idling over-rotation speed during an increase in the rotation speed of the crankshaft, the control section supplies a fuel to the engine and starts the combustion action of the engine, and
the driven member is driven by power of the crankshaft caused by combustion of the engine before the rotation speed of the crankshaft reaches the idling over-rotation speed during an increase in the rotation speed of the crankshaft.

In the vehicle of (5), before the rotation speed of the crankshaft reaches the idling over-rotation speed during an increase in the rotation speed of the crankshaft, power transmission between the crankshaft and the driven member is allowed. Before the increasing rotation speed of the crankshaft reaches the idling over-rotation speed, the driven member is driven by power of the crankshaft caused by combustion of the engine. This advances a timing when power is transmitted to the driven member in response to the accelerator operator being operated. Accordingly, the forward movement can be performed with a further increased responsiveness to a departure operation on the accelerator operator.

The idling over-rotation speed is not particularly limited except that it has to be a rotation speed higher than the idling rotation speed and lower than 2000 rpm. An example of the idling over-rotation speed is a speed higher than the idling rotation speed by a predetermined speed (e.g., 100 rpm, 200 rpm, or 300 rpm).

The idling over-rotation speed is not particularly limited. The idling over-rotation speed is, for example, lower than 2000 rpm.

(6) Another aspect of the present teaching is the vehicle of any one of (1) to (5), wherein
in response to satisfaction of a predetermined idling stop condition, the control section stops the combustion action of the engine, and in response to the accelerator operator being operated so as to instruct the engine to make an output, the control section controls the magnet type motor generator such that the magnet type motor generator causes the crankshaft to rotate using electricity in the electricity storage device with the combustion action of the engine stopped, and supplies a fuel to the engine and starts the combustion action of the engine.

In the vehicle of (6), so-called an idling stop is performed. This can increase the fuel efficiency as well as the forward movement responsiveness to a departure operation on the accelerator operator, and moreover can increase the acceleration performance.

### Advantageous Effects of Invention

The present teaching can provide a vehicle including a magnet type motor generator, the vehicle being capable of moving forward with an increased responsiveness to a departure operation.

The terminology used herein is for defining particular embodiments only and is not intended to be limiting the teaching.

As used herein, the term "and/or" includes any and all combinations of one or more of the associated listed items.

As used herein, the terms "including", "comprising", or "having", and variations thereof specify the presence of stated features, steps, operations, elements, components, and/or equivalents thereof, and can include one or more of steps, operations, elements, components, and/or their groups.

As used herein, the terms "attached", "connected", "coupled", and/or equivalents thereof are used in a broad sense, and include both of direct and indirect attachment, connection, and coupling. In addition, the terms "connected" and "coupled" can mean not only physical or mechanical connection or coupling but also direct or indirect electrical connection or coupling.

Unless otherwise defined, all terms (including technical and scientific terms) used herein have the same meaning as commonly understood by one of ordinary skill in the art to which the present teaching belongs.

It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein.

It will be understood that the description of the present teaching discloses the number of techniques and steps.

Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion.

Nevertheless, Description and Claims should be read with the understanding that such combinations are entirely within the scope of the present teaching and the claims.

This Description describes a novel vehicle.

In the description given below, for the purposes of explanation, numerous specific details are set forth in order to provide a thorough understanding of the present teaching.

It will be apparent, however, that those skilled in the art may practice the present teaching without these specific details.

The present disclosure is to be considered as an exemplification of the present teaching, and is not intended to limit the present teaching to the specific embodiments illustrated by drawings or descriptions below.

For example, the rotor that is connected to the crankshaft such that power transmission between the rotor and the crankshaft is allowed without interposition of a clutch may be directly coupled to the crankshaft, for example. The rotor may be connected to the crankshaft with a fixed speed ratio gear interposed therebetween, for example. The rotor is preferably connected to the crankshaft such that power transmission between the rotor and the crankshaft is constantly allowed.

The magnet type motor generator includes the rotor including the permanent magnet, and a stator opposed to the rotor. The magnet type motor generator includes, for example, a magnet type motor generator of outer rotor type, a magnet type motor generator of inner rotor type, and a magnet type motor generator of axial gap type. The magnet type motor generator may be either of surface permanent magnet type (SPM type) or of interior permanent magnet type (IPM type). The magnet type motor generator has a function as a generator, and generates electricity when being driven by the engine. The magnet type motor generator may also have a regeneration function. The magnet type motor generator may be configured to generate electricity when being driven by a rotary force of the driven member, thus applying braking to forward rotation of the crankshaft.

The power transmission device is a device that allows power transmission between the crankshaft and the driven member. The power transmission device as used herein represents a concept encompassing a transmission and a clutch. The transmission is a device that converts the magnitude of the rotation speed transmitted from the crankshaft to the driven member. A straddled vehicle including the transmission is understood as a straddled vehicle whose power transmission device includes the transmission. The power transmission device may either include the transmission or not include the transmission. The clutch is a device that switches whether power transmission from the crankshaft to the driven member is allowed or disconnected. A straddled vehicle including the clutch is understood as a straddled vehicle whose power transmission device includes the clutch

The power transmission device is configured to be capable of switching whether power transmission between the crankshaft and the driven member is allowed or disconnected. In other words, the power transmission device is configured to allow power transmission between the crankshaft and the driven member and also to be capable of disconnecting the power transmission. The power transmission device is configured to disconnect the power transmission when the rotation speed of the crankshaft is in a low-speed region while allowing the power transmission when the rotation speed of the crankshaft is out of the low-speed region. The lower limit value of the low-speed region is 0 rpm. The upper limit value of the low-speed region is just required to be less than 2000 rpm. The upper limit value of the low-speed region as used herein is synonymous with the transmission start rotation speed. The transmission start rotation speed corresponds to the clutch-in rotation speed in the clutch. The transmission start rotation speed may be, for example, less than an idling over-rotation speed (idling rotation speed + predetermined value), less than an idling rotation speed, less than a self-startable rotation speed, or less than an initial combustion rotation speed. The initial combustion rotation speed means a rotation speed of the crankshaft at a time when an initial combustion is performed. The self-sustainable rotation speed means a rotation speed of the crankshaft at a time when the engine becomes capable of self-sustaining operation. Disconnecting the power transmission when the rotation speed of the crankshaft is in the low-speed region makes it possible that the vehicle is, for example, walked or towed relatively easily. Here, it may be acceptable that the power transmission device is configured to constantly allow power transmission from the crankshaft to the driven member. The power transmission device that is configured to allow power transmission between the crankshaft and the driven member before the rotation speed of the crankshaft reaches 2000 rpm during an increase in the rotation speed of the crankshaft is a power transmission device including a clutch. The initial combustion and the self-sustaining operation will be described later.

The power transmission device as used herein is configured to allow power transmission between the crankshaft and the driven member before the rotation speed of the crankshaft reaches 2000 rpm during an increase in the rotation speed of the crankshaft, allowing the power transmission being independent of a driver's operation on the clutch. As the clutch, for example, an automatic clutch is applicable, but the clutch is not limited to this. The automatic clutch is configured to switch allowing and disconnecting power transmission not depending on a driver's operation on the clutch but in accordance with the rotation speed of the crankshaft. Non-limiting examples of the automatic clutch include a centrifugal clutch that switches allowing and disconnecting power transmission by using a centrifugal force. The centrifugal clutch may be any of a drum type clutch, a belt type clutch (belt clutch), or a centrifugal multiple-disc clutch. That is, the power transmission device as used herein may be one having a function as a transmission as well as a function as a clutch, such as a belt clutch. The clutch may be a clutch that is electronically controlled to allow or disconnect power transmission in accordance with the rotation speed of the crankshaft. The power transmission device as used herein may additionally have a function as a manual clutch which specifically is a function for switching allowing and disconnecting power transmission between the crankshaft and the driven member in accordance with a driver's operation on the clutch.

A clutch coupling style is not particularly limited, and may be either of mesh type or of friction type. A clutch actuating style is not particularly limited. Examples of the clutch include: an electric clutch that is controlled by an actuator, a motor, or the like; a hydraulic controlled clutch that is controlled using oil pressure; an air-pressure controlled clutch that is controlled using air pressure; and an electromagnetic clutch that is controlled using an electromagnetic force produced in energization of a coil or the like.

In a case where the power transmission device includes a transmission, the transmission may either include a neutral mechanism or not include a neutral mechanism. The neutral mechanism is a mechanism for disconnecting power transmission in the transmission. The neutral mechanism is normally provided in a stepped transmission. The stepped transmission is configured to disconnect power transmission when a gear position is set at the neutral position. In the present teaching, a continuously variable transmission including the neutral mechanism may be adoptable. Examples of the continuously variable transmission include a transmission mentioned below.

The transmission includes: a drive pulley configured to receive power from the crankshaft; a driven pulley configured to transmit power to the driven member (for example, to a rear wheel as a driving wheel); and a belt wrapped around the drive pulley and the driven pulley. Each of the drive pulley and the driven pulley includes two sheaves disposed with the belt pinched therebetween. At least one of the drive pulley or the driven pulley is configured such that the interval between the two sheaves is changeable. As the interval between the two sheaves is changed, the radial position of the belt pinched between the two sheaves is changed. As a result, the gear ratio is changed. When assuming a case where the above-mentioned continuously variable transmission is configured such that the interval between the sheaves is electronically controlled by, for example, an actuator such as a motor. In this case, changing the interval between the sheaves to make the belt no longer pinched between the sheaves results in disconnection of power transmission in the transmission. When assuming a case where the above-described transmission is configured such that the interval between the sheaves is controlled by, for example, a weight roller, and in other words, controlled using a centrifugal force. In this case, changing the interval between the sheaves to make the belt no longer pinched between the sheaves while the crankshaft is not rotating or is rotating at a low speed results in disconnection of power transmission in the transmission. The transmissions having such configurations are examples of the continuously variable transmission including the neutral mechanism. The continuously variable transmission including the neutral mechanism may be configured such that the interval between the sheaves is changed using a spring or a cam.

In the description herein, operating before reaching a predetermined rotational frequency during an increase in the rotation speed includes, for example, operating in part of a period for which the predetermined rotational frequency is being reached during an increase in the rotation speed. Operating before reaching a predetermined rotational frequency during an increase in the rotation speed includes, for example, operating until reaching the predetermined rotational frequency during an increase in the rotation speed. Operating before reaching a predetermined rotational frequency during an increase in the rotation speed includes, for example, operating also in a period for which the rotational frequency is equal to or more than the predetermined rotational frequency during an increase in the rotation speed. Thus, a configuration that allows power transmission before the rotation speed of the crankshaft reaches 2000 rpm during an increase in the rotation speed of the crankshaft includes, for example, a configuration that allows power transmission in part of a period for which the rotation speed of the crankshaft is reaching 2000 rpm during an increase in the rotation speed of the crankshaft. A configuration that allows power transmission before the rotation speed of the crankshaft reaches 2000 rpm during an increase in the rotation speed of the crankshaft includes, for example, a configuration that allows power transmission until the rotation speed of the crankshaft reaches 2000 rpm during an increase in the rotation speed of the crankshaft. A configuration that allows power transmission before the rotation speed of the crankshaft reaches 2000 rpm during an increase in the rotation speed of the crankshaft includes a configuration that allows power transmission even in a period for which the rotation speed of the crankshaft is equal to or more than 2000 rpm during an increase in the rotation speed of the crankshaft.

The accelerator operator is a member that a driver operates so as to instruct the engine to make an output. The accelerator operator is not particularly limited, and may be an accelerator grip, an accelerator pedal, a component constituted of a lever, or a component constituted of a button. The accelerator operator may be connected to a throttle valve included in the engine via a mechanical wire, for example. The accelerator operator may be electrically connected to a motor and a control device for driving the throttle valve, for example.

Examples of the engine include a single cylinder engine and an engine with two or more cylinders. Preferably, the engine is a four-stroke engine having a high-load region and a low-load region during four strokes, for example. The four-stroke engine having a high-load region and a low-load region during four strokes is, for example, a single cylinder engine, a two-cylinder engine, a three-cylinder engine of unequal interval explosion type, or a four cylinder engine of unequal interval explosion type. The four-stroke engine having a high-load region and a low-load region during four strokes has a lower rotation stability at a low rotation speed, as compared to other types of engines. Thus, reducing the rotation speed at which power transmission is started has been difficult. The vehicle according to some aspects of the present teaching is, even though it includes a four-stroke engine having a high-load region and a low-load region during four strokes, likely to move forward with an increased responsiveness to an accelerating operation. The engine, however, may be a four-stroke engine not having a high-load region and a low-load region during four strokes, for example.

The combustion action of the engine is an engine action during an engine combustion. For example, a state where the crankshaft is rotated by the motor while no combustion is performed in an engine combustion step does not correspond to the combustion action of the engine. The combustion action of the engine is started after the crankshaft starts rotating and a fuel is supplied, that is, started when a mixed gas in the engine which means a supplied fuel-air mixture is initially combusted. That is, the combustion action of the engine is started by an initial combustion. The initial combustion means a combustion of the engine that is performed for the first time after the magnet type motor generator causes the crankshaft to start rotating. Thus, a timing of starting the combustion action of the engine is when a mixed gas in the engine is initially combusted after the crankshaft starts rotating and a fuel is supplied. The self-sustaining operation means a state where the combustion action of the engine is performed such that the engine by its own can keep the crankshaft rotating. In the self-sustaining operation, the engine can keep the crankshaft rotating by using the combustion action of the engine itself even if the magnet type motor generator does not provide a torque (a positive torque in the forward rotation direction of the crankshaft) to the crankshaft. The magnet type motor generator may be configured to provide a torque (a positive torque in the forward rotation direction of the crankshaft) to the crankshaft while the engine is capable of the self-sustaining operation.

The vehicle is a transport system. The vehicle is a manned vehicle, or an unmanned transport system. The vehicle is, for example, a wheeled vehicle. The vehicle is, for example, a straddled vehicle. The vehicle is, for example, a motorcycle. Non-limiting examples of the motorcycle include scooter, moped, off-road, and on-road type motorcycles. The straddled vehicle is not limited to motorcycles, but may be, for example, an ATV (All Terrain Vehicle) or the like. The vehicle is not limited to straddled vehicles, but may be, for example, a golf cart or a four-wheel vehicle having a cabin. The vehicle of the present teaching is not limited to wheeled vehicles, but may be, for example, a vessel with a screw propeller.

The vehicle satisfies the following three requirements that:
(i) the vehicle is configured to lean into turns;
(ii) the vehicle is configured such that operations of the engine and/or the magnet type motor generator are controlled so as to change the rotation speed of the crankshaft in accordance with the amount of driver's operation on the accelerator operator, and such that whether the power transmission device allows or disconnects the power transmission between the crankshaft and the driven member is switched in accordance with the rotation speed of the crankshaft; and
(iii) the vehicle is configured such that the power transmission device disconnects the power transmission when the rotation speed of the crankshaft is in the low-speed region, while the power transmission device allows the power transmission when the rotation speed of the crankshaft is out of the low-speed region.

Regarding (i) above, when the vehicle configured to lean into turns takes a turn, the vehicle leans toward the inside of a curve in order to oppose a centrifugal force acting on the vehicle at a time of the turn. Examples of the vehicle capable of leaning into turns include a straddled vehicle (for example, a motorcycle, a motor tricycle) capable of leaning into turns. Regarding (ii) above, the vehicle that satisfies (ii) above is configured such that the rotation speed of the crankshaft (that is, operations of the engine and/or the magnet type motor generator) and switching of whether the power transmission device allows or disconnects power transmission are controlled in accordance with an operation on the accelerator operator. Regarding (iii) above, the vehicle that satisfies (iii) above can be walked and towed, as described above in relation to the power transmission device.

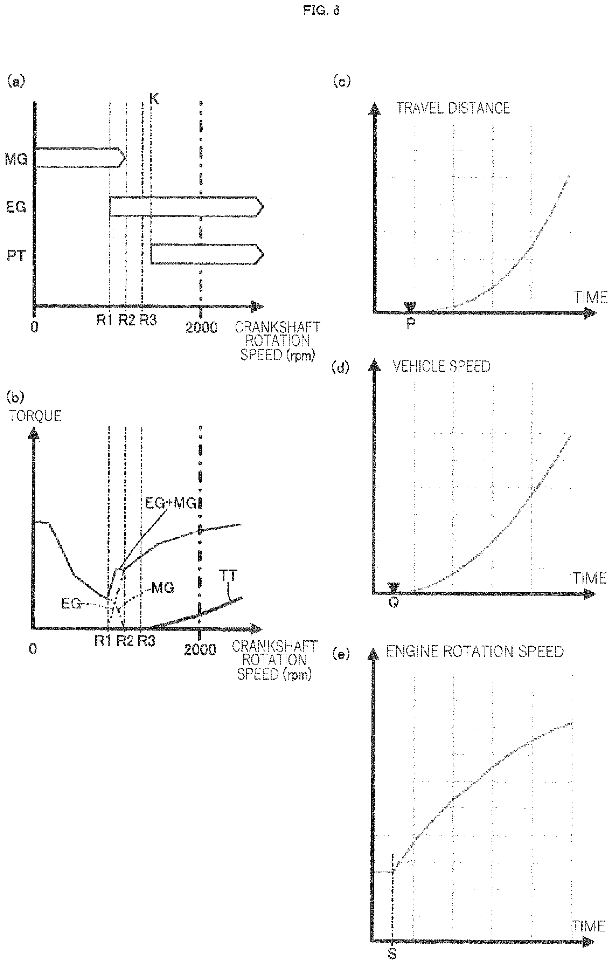

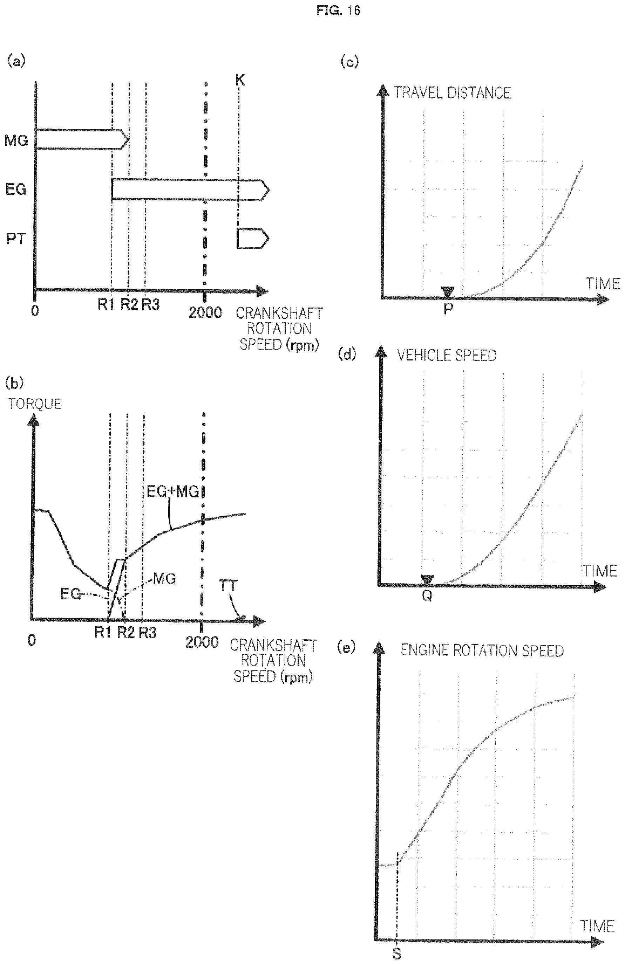

In the vehicle that satisfies (i), an agility is required, and therefore an acceleration performance at a time of departure normally tends to be highly valued. The acceleration performance at a time of departure is largely affected by clutch setting and especially by clutch stall setting. The acceleration performance as used herein is related to time or speed for traveling a certain distance (for example, several tens of meters), and is different from a forward-movement responsiveness to a departure operation as used herein. The responsiveness as used herein is what we call a start-up smoothness, and is related to the shortness of time from when a departure operation is received to when the vehicle departs. In other words, the responsiveness as used herein is related to a length of time from when a departure operation is received to when the driven member is driven, and the magnitude of a driving force transmitted to the driven member. If there is a small time lag from when a departure operation is received to when the driven member is driven, and additionally power transmission to the driven member is started even when a driving force transmitted to the driven member is not yet high; it is possible to obtain a smooth departure in accordance with the amount of the departure operation on the accelerator operator, while suppressing a break of the driving force and a rapid increase of the driving force. Accordingly, a high responsiveness to the departure operation can be obtained. A high responsiveness to a departure operation contributes to a control stability at a time of departure. In the vehicle according to the present teaching, power transmission is started quickly, the speed of forward movement becomes positive from zero quickly, and the vehicle moves forward quickly, as is obvious from the contrast of characteristics of straddled vehicles according to first to ninth embodiments (see FIG. 6 to FIG. 15) with characteristics of a straddled vehicle according to a comparative example (see FIG. 16) which will be described later. It is of course preferable that the vehicle satisfies the acceleration performance as well as the departure responsiveness. A clutch-stall rotation speed is, for example, 3500 rpm or more and 6700 rpm or less. The clutch-stall rotation speed means a rotation speed of the crankshaft at a time when clutch-stall occurs.

The magnet type motor generator causes the crankshaft to rotate until the rotation speed of the crankshaft reaches at least the initial combustion rotation speed. When the magnet type motor generator causes the crankshaft to rotate, the magnet type motor generator uses electricity in the electricity storage device, to provide a positive torque in the forward rotation direction of the crankshaft (in the direction for moving the vehicle forward) to the crankshaft. It is preferable that the magnet type motor generator causes the crankshaft to rotate until the rotation speed of the crankshaft reaches at least the self-sustainable rotation speed. It is also preferable that the magnet type motor generator causes the crankshaft to rotate until the rotation speed of the crankshaft reaches at least the idling rotation speed. It is also preferable that the magnet type motor generator causes the crankshaft to rotate until the rotation speed of the crankshaft reaches at least the idling over-rotation speed. It is also preferable that the magnet type motor generator causes the crankshaft to rotate until the rotation speed of the crankshaft exceeds at least 2000 rpm. It is preferable that the magnet type motor generator causes the crankshaft to rotate until the rotation speed of the crankshaft reaches the clutch-stall rotation speed. In the present teaching, the transmission start rotation speed is less than 2000 rpm, and therefore the rotation speed of the crankshaft at which power transmission is disconnected during deceleration can be made less than 2000 rpm. As a result, regeneration can be performed in a prolonged time. Thus, the magnet type motor generator can be driven until the rotation speed of the crankshaft becomes relatively high. If the rotation speed of the crankshaft at which the power transmission device disconnects power transmission during deceleration is less than 2000 rpm, it is possible to obtain smooth deceleration while suppressing a break of the driving force and a rapid decrease of the driving force.

The electricity storage device is a device that stores electricity. The electricity storage device has a capacity of supplying electricity to the magnet type motor generator, the capacity at least enabling the magnet type motor generator itself to increase the rotation speed of the crankshaft up to the initial combustion rotation speed of the engine with the electricity in the electricity storage device. The electricity storage device is not particularly limited, and may be a battery or a capacitor, for example.

The driven member according to an aspect of the present teaching is a wheel, for example. The driven member may be a screw propeller, for example. The number of driven members is not particularly limited. In a vehicle including a front wheel and a rear wheel, only the front wheel, only the rear wheel, or both the front wheel and the rear wheel may serve as the driven member.

The driven member may be driven by both power of the crankshaft caused by combustion of the engine and power of the crankshaft caused by driving of the magnet type motor generator before the rotation speed of the crankshaft reaches 2000 rpm during an increase in the rotation speed of the crankshaft. The driven member that is driven by both power of the crankshaft caused by combustion of the engine and power of the crankshaft caused by driving of the magnet type motor generator before the rotation speed of the crankshaft reaches 2000 rpm during an increase in the rotation speed of the crankshaft includes, for example, a driven member that is driven by both power of the crankshaft caused by combustion of the engine and power of the crankshaft caused by driving of the magnet type motor generator in part of a period in which the rotation speed of the crankshaft is reaching 2000 rpm during an increase in the rotation speed of the crankshaft. The driven member that is driven by both power of the crankshaft caused by combustion of the engine and power of the crankshaft caused by driving of the magnet type motor generator before the rotation speed of the crankshaft reaches 2000 rpm during an increase in the rotation speed of the crankshaft may include a driven member that is driven by both power of the crankshaft caused by combustion of the engine and power of the crankshaft caused by driving of the magnet type motor generator until the rotation speed of the rotation speed of the crankshaft reaches 2000 rpm during an increase in the rotation speed of the crankshaft. The driven member that is driven by both power of the crankshaft caused by combustion of the engine and power of the crankshaft caused by driving of the magnet type motor generator before the rotation speed of the crankshaft reaches 2000 rpm during an increase in the rotation speed of the crankshaft may include a driven member that is driven by both power of the crankshaft caused by combustion of the engine and power of the crankshaft caused by driving of the magnet type motor generator even in a period for which the rotation speed of the crankshaft is equal to or more than 2000 rpm during an increase in the rotation speed of the crankshaft. The driven member may be, for example, driven only by power of the crankshaft caused by combustion of the engine before the rotation speed of the crankshaft reaches 2000 rpm during an increase in the rotation speed of the crankshaft.

The driven member is, for example, driven by both power of the crankshaft caused by combustion of the engine and power of the magnet type motor generator after the combustion action of the engine is started and before the rotation speed of the crankshaft reaches 2000 rpm during an increase in the rotation speed of the crankshaft. The driven member may be, for example, driven only by power of the crankshaft caused by combustion of the engine after the combustion action of the engine is started and before the rotation speed of the crankshaft reaches 2000 rpm during an increase in the rotation speed of the crankshaft.

The driven member may be, for example, configured not to be driven by power of the crankshaft caused by the magnet type motor generator in at least part of a period for which the rotation speed of the crankshaft is lower than the initial combustion rotation speed.

The driven member may be, for example, configured not to be driven by power of the crankshaft caused by combustion of the engine in at least part of a period for which the rotation speed of the crankshaft is higher than the idling rotation speed.

The control section has a function to control the engine and a function to control the magnet type motor generator. A hardware configuration of the control section is not particularly limited. The control section may be constituted of a computer including a central processing unit and a storage device. The control section may be partially or entirely constituted of a wired logic which is an electronic circuit. The control section as a whole may be physically configured as a single piece, or may be physically configured as a combination of different devices. For example, a device having a function to control the engine and a device having a function to control the magnet type motor generator may be configured as separate pieces.

The control section is preferably configured to be capable of changing an electricity generation load of the magnet type motor generator. For example, in a case where an inverter is disposed between the magnet type motor generator and the electricity storage device, the electricity generation load can be changed by changing the duty ratio. The electricity generation load can also be changed by short-circuiting circuits of respective phases extending from the magnet type motor generator to the electricity storage device. Changing the electricity generation load in this manner can change the idling rotation speed of the crankshaft. The idling rotation speed is not particularly limited. The idling rotation speed may be less than 2000 rpm and, for example, equal to or lower than 1500 rpm, equal to or lower than 1400 rpm, equal to or lower than 1300 rpm, equal to or lower than 1200 rpm, equal to or lower than 1100 rpm, or equal to or lower than 1000 rpm.

The control section may be configured to implement an idling stop, may be configured to implement an idling stop upon satisfaction of a predetermined idling stop condition, or may be configured not to implement an idling stop. Implementation of the idling stop makes the engine stop its combustion action without any idling. The idling stop condition is not particularly limited, and a conventionally known condition may be adoptable as the idling stop condition. Whether or not the idling stop condition is satisfied is determined based on, for example, detection results obtained by various switches and/or various sensors. Specific examples thereof include the engine temperature (for example, the coolant temperature), the amount of operation on the accelerator operator, the vehicle speed, the rotation speed of the crankshaft, and travel history data in a current operation state.

### Brief Description of Drawings

[FIG. 1] An explanatory diagram of a straddled vehicle according to a first embodiment.
[FIG. 2] A partial cross-sectional view schematically showing an overview configuration of an engine shown in FIG. 1 and therearound.
[FIG. 3] An explanatory diagram schematically showing the relationship between a crank angle position of the engine and a required torque.
[FIG. 4] A cross-sectional view showing a cross-section of a magnet type motor generator MG shown in FIG. 2, as taken perpendicular to the rotation axis thereof.
[FIG. 5] A block diagram showing an overview electrical configuration of a straddled vehicle 1 shown in FIG. 1.
[FIG. 6] (a) to (e) are diagrams each showing start-time characteristics of a straddled vehicle 1 according to a first embodiment.
[FIG. 7] (a) to (e) are diagrams each showing start-time characteristics of a straddled vehicle 1 according to a second embodiment.
[FIG. 8] (a) to (e) are diagrams each showing start-time characteristics of a straddled vehicle 1 according to a third embodiment.
[FIG. 9] (a) to (e) are diagrams each showing start-time characteristics of a straddled vehicle 1 according to a fourth embodiment.
[FIG. 10] (a) to (e) are diagrams each showing start-time characteristics of a straddled vehicle 1 according to a fifth embodiment.
[FIG. 11] (a) and (b) are diagrams each showing deceleration-time characteristics of the straddled vehicle 1 according to the fifth embodiment.
[FIG. 12] (a) to (e) are diagrams each showing start-time characteristics of a straddled vehicle 1 according to a sixth embodiment.
[FIG. 13] (a) to (e) are diagrams each showing start-time characteristics of a straddled vehicle 1 according to a seventh embodiment.
[FIG. 14] (a) to (e) are diagrams each showing start-time characteristics of a straddled vehicle 1 according to an eighth embodiment.
[FIG. 15] (a) to (e) are diagrams each showing start-time characteristics of a straddled vehicle 1 according to a ninth embodiment.
[FIG. 16] (a) to (e) are diagrams each showing start-time characteristics of a straddled vehicle 1 according to a comparative example.

### Description of Embodiments

In the following, some embodiments of the present teaching will be described with reference to the drawings. The present teaching is not limited to the embodiments below.

### <First Embodiment>

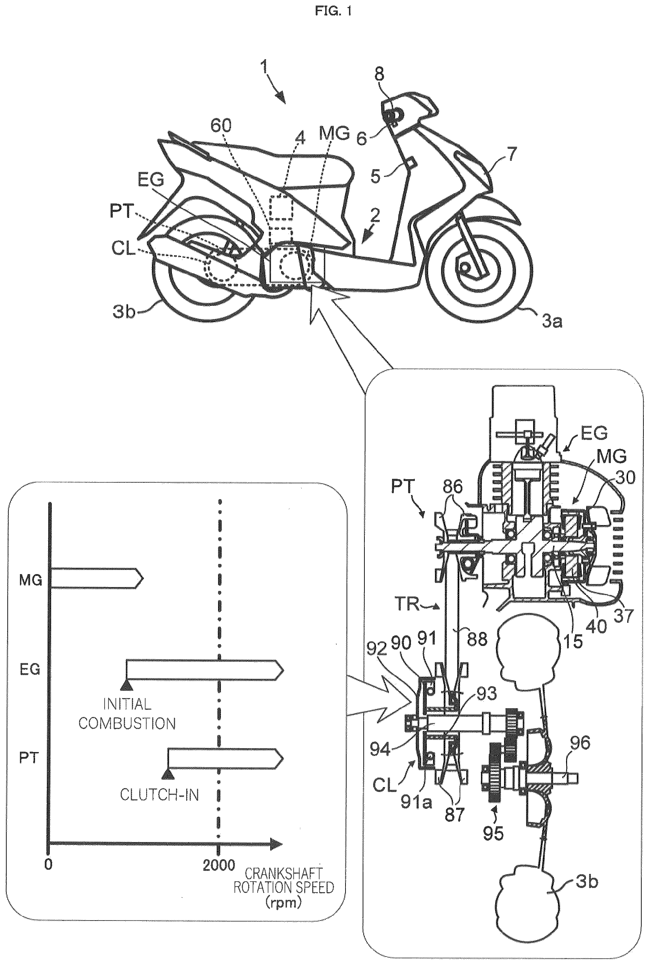

FIG. 1 is an explanatory diagram of a straddled vehicle 1 according to a first embodiment. The upper part of the Figure schematically shows the straddled vehicle 1 in a side view. The lower right part of the Figure schematically shows a mechanism ranging from an engine EG to a wheel 3b in the straddled vehicle 1. The lower left part of the Figure shows the relationship of actions of a magnet type motor generator MG, the engine EG, and a power transmission mechanism PT relative to the rotation speed of a crankshaft 15.

The straddled vehicle 1 shown in FIG. 1 includes a vehicle body 2 and wheels 3a, 3b. Specifically, the straddled vehicle 1 is a motorcycle. The straddled vehicle 1 is an example of a vehicle.

The straddled vehicle 1 includes the engine EG. The engine EG is a four-stroke single cylinder engine. The engine EG has the crankshaft 15. The engine EG outputs power through the crankshaft 15.

The straddled vehicle 1 includes the magnet type motor generator MG. The magnet type motor generator MG includes a rotor 30 and a stator 40. The rotor 30 includes a permanent magnet 37. The rotor 30 is connected to the crankshaft 15 such that power transmission between the rotor 30 and the crankshaft 15 is allowed without interposition of a clutch and such that the rotor 30 can rotate with a fixed speed ratio relative to the crankshaft 15. The stator 40 is arranged opposed to the rotor 30. The magnet type motor generator MG rotates the crankshaft 15 at least when starting a combustion action of the engine EG. The magnet type motor generator MG generates electricity when being driven by the engine EG.

The straddled vehicle 1 includes an electricity storage device 4. The electricity storage device 4 supplies and receives electricity to and from the magnet type motor generator MG.

The straddled vehicle 1 includes an accelerator operator 8. The accelerator operator 8 is operated to instruct the engine EG to make an output. The accelerator operator 8 is configured to, when operated by the driver, receive an instruction about an increase or decrease in the output of the engine EG.

The straddled vehicle 1 includes the wheel 3b. The wheel 3b is an example of a driven member. The wheel 3b is configured to be driven by power outputted from the engine EG, to make the straddled vehicle 1 move forward.

The straddled vehicle 1 includes the power transmission device PT. The power transmission device PT is configured to transmit power from the crankshaft 15 to the wheel 3b.

The straddled vehicle 1 includes a control device 60 serving as a control section. The control device 60 energizes the magnet type motor generator MG, to rotate the crankshaft 15. The control device 60 supplies a fuel to the engine EG while the crankshaft 15 is rotating, to start the combustion action of the engine EG.

The control device 60 controls the magnet type motor generator MG such that, if the accelerator operator 8 is operated so as to instruct the engine EG to make an output in a state where the combustion action of the engine EG is stopped, the magnet type motor generator MG causes the crankshaft 15 to rotate using electricity in the electricity storage device 4 with the combustion action of the engine EG stopped. The magnet type motor generator MG causes the crankshaft 15 to rotate at least in a period from when the rotation of the crankshaft 15 is started to when an initial combustion of the engine EG is performed. Then, before the rotation speed of the crankshaft 15 reaches 2000 rpm, the control device 60 supplies a fuel to the engine EG and starts the combustion action of the engine EG. The control device 60 supplies the fuel to the engine EG and starts the combustion action of the engine EG while the magnet type motor generator MG is rotating the crankshaft 15.

The power transmission device PT is configured to allow power transmission between the crankshaft 15 and the wheel 3b before the rotation speed reaches 2000 rpm during an increase in the rotation speed of the crankshaft 15. The power transmission device PT includes a transmission TR and a clutch CL.

The transmission TR is a continuously variable transmission. The transmission TR includes a drive pulley 86 disposed on the crankshaft 15, a driven pulley 87 disposed closer to the wheel 3b than the drive pulley 86, and a belt 88 wrapped around the drive pulley 86 and the driven pulley 87. The drive pulley 86 includes an immovable sheave fixed to the crankshaft 15, and a movable sheave movable relative to the crankshaft 15 in the axis direction of the crankshaft 15. The drive pulley 86 is configured such that the distance between the sheaves is changeable. The driven pulley 87 includes an immovable sheave fixed to a rotation shaft 93, and a movable sheave movable relative to the rotation shaft 93 in the axis direction of the rotation shaft 93. The driven pulley 87 is configured such that the distance between the sheaves is changeable. The rotation shaft 93 having a tubular shape is disposed radially outward of an intermediate shaft 94. The rotation shaft 93 is coaxial with the intermediate shaft 94, and is rotatable relative to the intermediate shaft 94. The transmission TR is capable of changing a gear ratio which is the ratio of a rotation speed input to a rotation speed output. The transmission TR is capable of changing the gear ratio corresponding to the rotation speed of the crankshaft 15 relative to the rotation speed of the wheel.

The clutch CL is a drum type centrifugal clutch. The clutch CL is an automatic clutch operated by a centrifugal force. The clutch CL is a friction clutch that uses a frictional force for power transmission. The clutch CL includes a carrier 90 having a clutch shoe 91, and a clutch housing 92 that accommodates the carrier 90. A clutch spring 91a causes the clutch shoe 91 to be accommodated inside with respect to the radial direction of the rotation shaft 93. When a centrifugal force is applied to the clutch shoe 91, the clutch shoe 91 expands in the radial direction to come into contact with the clutch housing 92, thus rotating the clutch housing 92. Upon the clutch housing 92 starting rotation, power transmission from the drive side to the driven side via the clutch CL is started. This means that the clutch CL is brought in. In this embodiment, the clutch CL is configured such that the rotation speed of the crankshaft 15 is less than 2000 rpm when the clutch CL is brought in. The clutch housing 92 is fixed to the intermediate shaft 94. Thus, as the clutch housing 92 rotates, the intermediate shaft 94 rotates. The intermediate shaft 94 is rotatably provided to the vehicle body 2. The rotation of the intermediate shaft 94 is transmitted to a shaft 96 of the wheel 3b via a speed reducer 95.

Power transmission from the crankshaft 15 to the wheel 3b is as follows. In the power transmission device PT, power of the crankshaft 15 is transmitted from the drive pulley 86 to the driven pulley 87 of the transmission TR through the belt 88. Power of the driven pulley 87 is transmitted from the rotation shaft 93 to the carrier 90 of the clutch CL. As the rotation speed of the crankshaft 15 increases, the rotation speed of the carrier 90 increases. When the diameter of the clutch shoe 91 is increased by a centrifugal force, the clutch CL is brought in. The clutch CL is brought in before the rotation speed of the crankshaft 15 reaches 2000 rpm during an increase in the rotation speed of the crankshaft 15. Rotation of the clutch housing 92 is transmitted from the intermediate shaft 94 to the shaft 96 via the speed reducer 95. Accordingly, the wheel 3b is rotated before the rotation speed of the crankshaft 15 reaches 2000 rpm during an increase in the rotation speed of the crankshaft 15. Thus, the straddled vehicle 1 travels with power of the crankshaft 15 caused by the combustion of the engine EG before the rotation speed of the crankshaft 15 reaches 2000 rpm during an increase in the rotation speed of the crankshaft 15. The power transmission device PT of this embodiment is an example of a power transmission device according to the present teaching. The power transmission device according to the present teaching is not limited to the power transmission device PT of this embodiment.

The straddled vehicle 1 further includes a main switch 5. The main switch 5 is a switch used to supply electricity to each part of the straddled vehicle 1. The straddled vehicle 1 includes a starter switch 6. The starter switch 6 is a switch operable by the driver. The straddled vehicle 1 includes the accelerator operator 8. The accelerator operator 8 is configured to instruct the engine EG to make an output in accordance with an operation on the accelerator operator 8. The accelerator operator 8 is configured to instruct the straddled vehicle 1 to accelerate in accordance with an operation on the accelerator operator 8. The accelerator operator 8 is, specifically, an accelerator grip. The straddled vehicle 1 includes the electricity storage device 4. The straddled vehicle 1 includes the control device 60 that controls each part of the straddled vehicle 1.

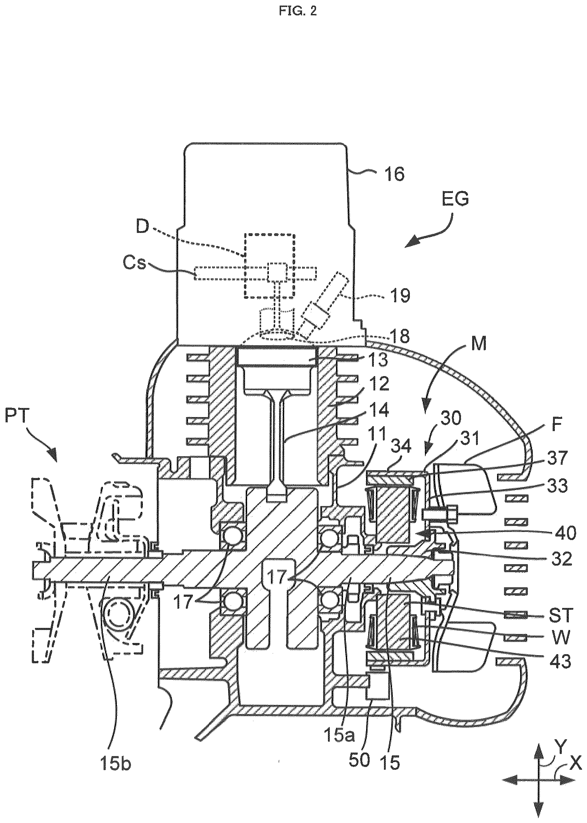

FIG. 2 is a partial cross-sectional view schematically showing an overview configuration of the engine EG shown in FIG. 1 and therearound.

The engine EG includes a crank case 11, a cylinder 12, a piston 13, a connecting rod 14, and the crankshaft 15. The piston 13 is disposed in the cylinder 12 and is capable of reciprocating therein. The crankshaft 15 is disposed in the crank case 11 and is rotatable therein. The crankshaft 15 is coupled to the piston 13 via the connecting rod 14. A cylinder head 16 is attached to the upper side of the cylinder 12. The cylinder 12, the cylinder head 16, and the piston 13 define a combustion chamber. The cylinder head 16 has an exhaust valve 18 and an intake valve (not shown). The exhaust valve 18 controls discharge of an exhaust gas from the cylinder 12. The intake valve controls supply of a mixed gas to the combustion chamber in the cylinder 12. The exhaust valve 18 and the intake valve are operated by an action of a cam (not shown) provided to a camshaft Cs which rotates in conjunction with the crankshaft 15. The crankshaft 15 is supported in a freely rotatable manner by the crank case 11 with a pair of bearings 17 interposed therebetween.

The crankshaft 15 included in the engine EG has a first end portion 15a (a right end portion in the Figure) to which the magnet type motor generator MG is attached. No clutch is disposed between the crankshaft 15 and the magnet type motor generator MG. The crankshaft 15 included in the engine EG has a second end portion 15b (a left end portion in the Figure) to which the power transmission device PT is provided.

The engine EG includes a decompression device D. The decompression device D is outlined in FIG. 2. The decompression device D acts to decrease the pressure in the cylinder 12 in a compression stroke. In the compression stroke, the decompression device D opens the exhaust valve 18 so that the mixed gas is discharged out of the cylinder 12. The decompression device D is configured to open the exhaust valve 18 in the compression stroke if the rotation speed of the crankshaft 15 is equal to or lower than a decompression upper limit speed that is set for the decompression device D. The camshaft Cs which rotates in conjunction with the crankshaft 15 is provided with a mechanism that causes the decompression device D to open the exhaust valve 18. The decompression device D, for example, uses a centrifugal force involved in rotation of the camshaft Cs, for the action to open the exhaust valve 18. Since the decompression device D lowers the pressure of the mixed gas in the cylinder 12 in the compression stroke, a compression reaction force acting on the piston 13 is reduced. In a high-load region, a load on an action of the piston 13 is reduced.

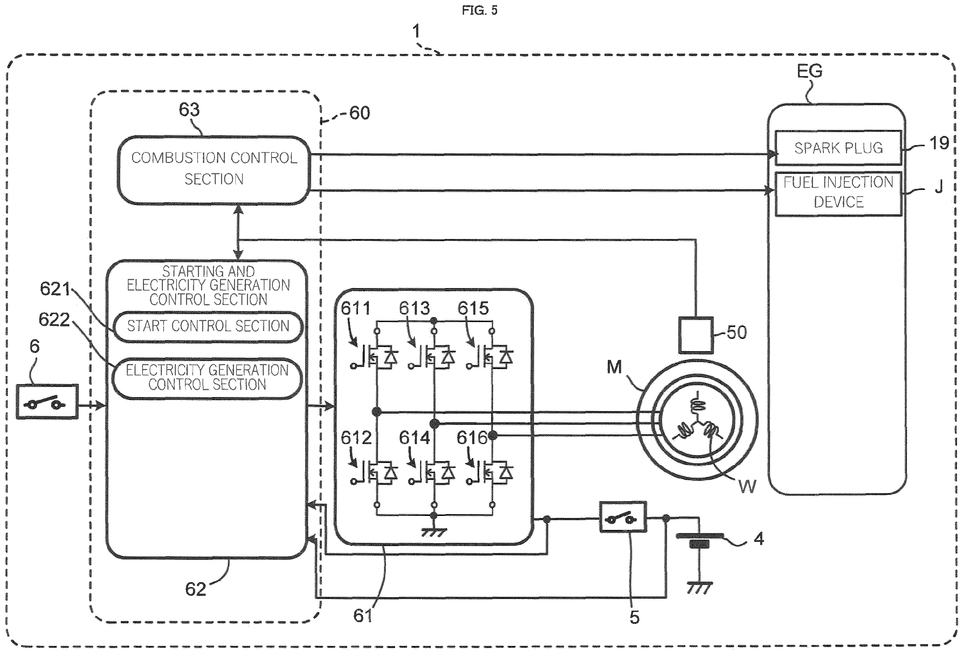

The engine EG also includes a throttle valve (not shown) and a fuel injection device J (see FIG. 5). The throttle valve is opened with an opening degree that is based on the amount of operation on the accelerator operator 8 (see FIG. 1). The throttle valve adjusts the amount of flowing air in accordance with its opening degree, and thus adjusts the amount of air to be supplied into the cylinder 12. The fuel injection device J injects a fuel, and thus supplies the fuel to the combustion chamber in the cylinder 12. A mixed gas composed of the air flowing through the throttle valve and the fuel injected from the fuel injection device J is supplied to the combustion chamber in the cylinder 12. The engine EG is provided with a spark plug 19. The spark plug 19 ignites the mixed gas in the cylinder 12, so that the mixed gas is combusted.

The engine EG is an internal combustion engine. The engine EG is supplied with the fuel. The engine EG performs a combustion action whereby the mixed gas is combusted, to output power (torque).

More specifically, the mixed gas containing the fuel supplied to the combustion chamber is combusted so that the piston 13 moves. The combustion of the mixed gas makes the piston 13 reciprocate. In conjunction with the reciprocation of the piston 13, the crankshaft 15 rotates. The power is outputted to the outside of the engine EG through the crankshaft 15. The wheel 3b (see FIG. 1), which receives the power outputted from the engine EG through the crankshaft 15, drives the straddled vehicle 1.

The engine EG outputs the power through the crankshaft 15. The power of the crankshaft 15 is transmitted to the wheel 3b through the power transmission mechanism PT (see FIG. 1). The straddled vehicle 1 is driven by the wheel 3b receiving the power from the engine EG through the crankshaft 15.

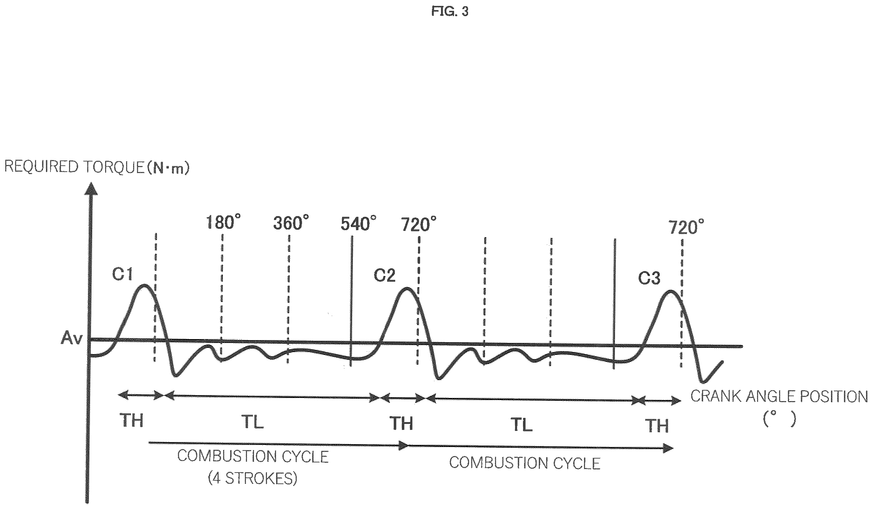

FIG. 3 is an explanatory diagram schematically showing the relationship between a crank angle position of the engine EG and a required torque. FIG. 3 shows a torque required for the crankshaft 15 to rotate with no combustion action of the engine EG.

The engine EG is a four-stroke engine. The engine EG has, during one combustion cycle composed of four strokes, a high-load region TH in which a high load is put on rotation of the crankshaft 15 and a low-load region TL in which a load put on rotation of the crankshaft 15 is lower than the load in the high-load region TH. The high-load region means a region in one combustion cycle of the engine EG where a load torque is higher than an average value Av of the load torque over the one combustion cycle. On the basis of the rotation angle of the crankshaft 15, the low-load region TL is equal to or wider than the high-load region TH. To be specific, the low-load region TL is wider than the high-load region TH. In other words, a rotation angle region corresponding to the low-load region TL is wider than a rotation angle region corresponding to the high-load region TH. The engine EG, during its rotation, repeats a combustion stroke (expansion stroke), an exhaust stroke, an intake stroke, and a compression stroke. The compression stroke overlaps the high-load region TH.

One combustion cycle of the engine EG includes one combustion stroke, one exhaust stroke, one intake stroke, and one compression stroke. In the intake stroke, the mixed gas is supplied to the combustion chamber. In the compression stroke, the piston 13 compresses the mixed gas in the combustion chamber. In the expansion stroke, the mixed gas ignited by the spark plug 19 combusts and pushes the piston 13. In the exhaust stroke, an exhaust gas produced after the combustion is discharged out of the combustion chamber.

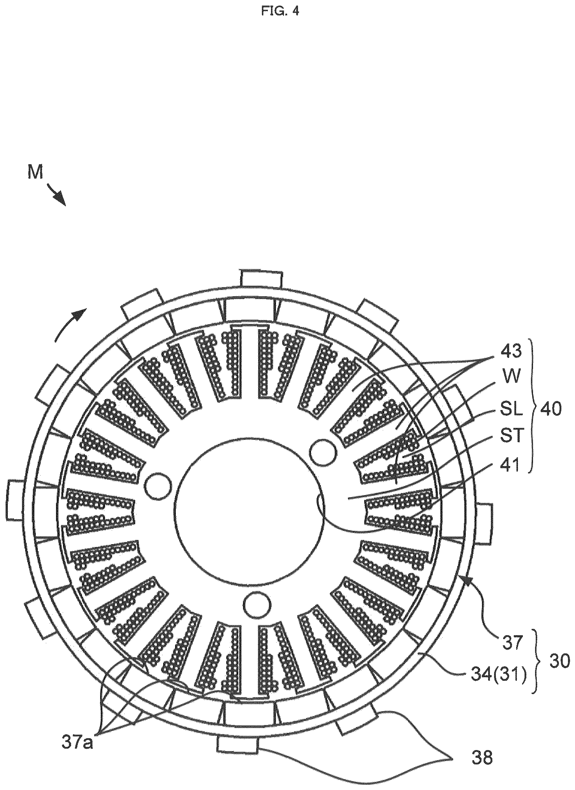

FIG. 4 is a cross-sectional view showing a cross-section of the magnet type motor generator MG shown in FIG. 2, as taken perpendicular to the rotation axis thereof. The magnet type motor generator MG will be described with reference to FIG. 2 and FIG. 4.

The magnet type motor generator MG is a three-phase brushless motor of permanent magnet type. The magnet type motor generator MG also functions as a three-phase brushless generator of permanent magnet type.

The magnet type motor generator MG includes the rotor 30 and the stator 40. The magnet type motor generator MG according to this embodiment is of radial gap type. The magnet type motor generator MG is of outer rotor type. That is, the rotor 30 is an outer rotor. The stator 40 is an inner stator.

The rotor 30 includes a rotor body part 31. The rotor body part 31 is made of, for example, a ferromagnetic material. The rotor body part 31 is in the shape of a bottomed tube. The rotor body part 31 includes a tubular boss portion 32, a disk-shaped bottom wall portion 33, and a tubular back yoke portion 34. The bottom wall portion 33 and the back yoke portion 34 are integrally formed. Here, structuring the bottom wall portion 33 and the back yoke portion 34 as separate parts may be acceptable. The bottom wall portion 33 and the back yoke portion 34 are fixed to the crankshaft 15 via the tubular boss portion 32. The rotor 30 is not provided with a winding to which a current is supplied.

The rotor 30 includes the permanent magnet 37. The rotor 30 includes a plurality of magnetic pole portions 37a. The plurality of magnetic pole portions 37a are constituted of the permanent magnet 37. The plurality of magnetic pole portions 37a are provided on an inner circumferential surface of the back yoke portion 34. In this embodiment, the permanent magnet 37 includes a plurality of permanent magnets. Thus, the rotor 30 includes the plurality of permanent magnets. The plurality of magnetic pole portions 37a are provided in the plurality of permanent magnets, respectively. The permanent magnet 37 may alternatively be configured as a single annular permanent magnet. In such a configuration, the single permanent magnet is magnetized such that the plurality of magnetic pole portions 37a appear side by side on the inner circumferential surface.

The plurality of magnetic pole portions 37a are provided such that N-pole and S-pole appear alternately with respect to a circumferential direction of the magnet type motor generator MG. In this embodiment, the number of magnetic poles of the rotor 30 opposed to the stator 40 is twenty-four. The number of magnetic poles of the rotor 30 means the number of magnetic poles opposed to the stator 40. No magnetic material is disposed between the magnetic pole portions 37a and the stator 40. The magnetic pole portions 37a are disposed outside the stator 40 with respect to a radial direction of the magnet type motor generator MG. The back yoke portion 34 is disposed outside the magnetic pole portions 37a with respect to the radial direction. The number of magnetic pole portions 37a included in the magnet type motor generator MG is more than the number of teeth 43. The rotor 30 may be of interior permanent magnet type (IPM type) in which the magnetic pole portions 37a are embedded in a magnetic material; however, it is preferable that the rotor 30 is of surface permanent magnet type (SPM type) in which the magnetic pole portions 37a are exposed from a magnetic material as adopted in this embodiment.

A cooling fan F is provided to the bottom wall portion 33 of the rotor 30.

The stator 40 includes a stator core ST and a plurality of stator windings W. The stator core ST includes a plurality of teeth 43 arranged at intervals with respect to the circumferential direction. The plurality of teeth 43 integrally extend radially outward from the stator core ST. In this embodiment, eighteen teeth 43 in total are arranged at intervals with respect to the circumferential direction. In other words, the stator core ST has eighteen slots SL in total that are arranged at intervals with respect to the circumferential direction. The teeth 43 are arranged at equal intervals with respect to the circumferential direction.

The number of magnetic pole portions 37a is equal to 4/3 of the number of slots. Each slot is an interval between adjacent ones of the teeth 43. The number of slots is equal to the number of teeth 43. It is preferable that the number of magnetic poles 37a is more than 2/3 of the number of slots, as illustrated in this embodiment. It is further preferable that the number of magnetic poles 37a is equal to or more than the number of slots. It is still further preferable that the number of magnetic poles 37a is more than the number of slots. It is particularly preferable that the number of magnetic poles 37a is equal to 4/3 of the number of slots. This is because an output torque of the magnet type motor generator at a low rotation speed is increased, which enables the vehicle to move forward with a further increased responsiveness.

The stator winding W is wound around each of the teeth 43. That is, the multi-phase stator windings W are disposed through the slots SL. In a state shown in FIG. 4, the stator windings W are in the slots SL. Each of the multi-phase stator windings W belongs to any of U-phase, V-phase, and W-phase. The stator windings W are arranged in the order of U-phase, V-phase, and W-phase, for example. How the winding W is wound is not particularly limited. The winding W may be wound with either in a concentrated winding manner or in a distributed winding manner.

The rotor 30 includes, on its outer surface, a plurality of detection object parts 38 for detection of the rotation position of the rotor 30. Magnetic effects are used to detect the plurality of detection object parts 38. The plurality of detection object parts 38 arranged at intervals with respect to the circumferential direction are provided on the outer surface of the rotor 30. The detection object parts 38 are made of a ferromagnetic material.

A rotor position detection device 50 is a device that detects the position of the rotor 30. The rotor position detection device 50 is disposed at a position allowed to be opposed to the plurality of detection object parts 38. The rotor position detection device 50 includes a pick-up coil and a magnet. The rotor position detection device 50 magnetically detects the detection object parts 38. The rotor position detection device for detecting the position of the rotor may be constituted of a Hall IC that detects the magnetic pole portions 37.

The rotor 30 of the magnet type motor generator MG is connected to the crankshaft 15 such that the rotor 30 is rotated along with rotation of the crankshaft 15. More specifically, the rotor 30 is connected to the crankshaft 15 such that the rotor 30 is rotated with a fixed speed ratio relative to the crankshaft 15. The rotor 30 is directly connected to the crankshaft 15 of the engine EG. In this embodiment, the rotor 30 is attached to the crankshaft 15 without interposition of any clutch. A power transmission mechanism such as a belt, a chain, a gear, a speed reducer, or a speed increaser is not interposed between the rotor 30 and the crankshaft 15. The rotor 30 is rotated with a speed ratio of 1:1 relative to the crankshaft 15. The magnet type motor generator MG is configured to rotate the rotor 30 at a time of combustion action of the engine EG. The rotation axis of the magnet type motor generator MG substantially coincides with the rotation axis of the crankshaft 15.

At a time of engine start, the magnet type motor generator MG drives the crankshaft 15 in a forward rotation to start the engine EG. At a time of combustion action of the engine EG, the magnet type motor generator MG is driven by the engine EG to generate electricity. Thus, the magnet type motor generator MG has both a function to start the engine EG by driving the crankshaft 15 in a forward rotation and a function to generate electricity by being driven by the engine EG at a time of combustion action of the engine EG. In at least part of a period following the start of the engine EG, the magnet type motor generator MG is driven in a forward rotation by the crankshaft 15, to function as a generator. In at least part of a period for which the engine EG makes the combustion action, the magnet type motor generator MG as well as the engine EG may provide a positive torque in the forward rotation direction of the crankshaft 15 to the crankshaft 15 by using the electricity in the electricity storage device 4.

FIG. 5 is a block diagram showing an overview electrical configuration of the straddled vehicle 1 shown in FIG. 1. The straddled vehicle 1 is provided with an inverter 61. The control device 60 controls respective parts, including the inverter 61, of the straddled vehicle 1.

The magnet type motor generator MG and the electricity storage device 4 are connected to the inverter 61. When the magnet type motor generator MG acts as a motor, the electricity storage device 4 supplies electricity to the magnet type motor generator MG. The electricity storage device 4 is charged with electricity that is generated by the magnet type motor generator MG.

The electricity storage device 4 is connected to the inverter 61 and to an electricity consuming apparatus 70 via the main switch 5. The electricity consuming apparatus 70 is an apparatus that consumes electricity when operating. Examples of the electricity consuming apparatus 70 include accessories such as a headlight 7 (see FIG. 1).

The inverter 61 includes a plurality of switching parts 611 to 616. The inverter 61 of this embodiment includes six switching parts 611 to 616. The switching parts 611 to 616 constitute a three-phase bridge inverter. The plurality of switching parts 611 to 616 are connected to the respective phases of the multi-phase stator windings W. To be specific, among the plurality of switching parts 611 to 616, every two switching parts that are connected in series constitute a half bridge. The half bridges each corresponding to each phase are connected in parallel to the electricity storage device 4. Those of the switching parts 611 to 616 constituting the half bridge of each phase are connected to the corresponding phase of the multi-phase stator windings W.

The switching parts 611 to 616 control a current flow between the electricity storage device 4 and the magnet type motor generator MG. Specifically, the switching parts 611 to 616 selectively allow or block the passing of a current between the electricity storage device 4 and the multi-phase stator windings W. More specifically, when the magnet type motor generator MG functions as a motor, energizing each of the multi-phase stator windings W is selectively allowed or stopped by on/off-operation on the switching parts 611 to 616. When the magnet type motor generator MG functions as a generator, the passing of a current between each of the stator windings W and the electricity storage device 4 is selectively allowed or blocked by on/off-operation on the switching parts 611 to 616. By switching on/off the switching parts 611 to 616 one after another, a voltage control and a rectification are performed on a three-phase AC outputted from the magnet type motor generator MG. The switching parts 611 to 616 control a current that the magnet type motor generator MG outputs to the electricity storage device 4.

Each of the switching parts 611 to 616 has a switching element. The switching element is, for example, a transistor, and more specifically, an FET (Field Effect Transistor).

The fuel injection device J, the spark plug 19, and the electricity storage device 4 are connected to the control device 60. The rotor position detection device 50 is also connected to the control device 60. The control device 60 acquires the rotation speed of the crankshaft 15 based on a detection result obtained by the rotor position detection device 50. Although the straddled vehicle 1 is configured such that the rotor position detection device 50 acquires the rotation speed of the crankshaft 15, how to acquire the rotation speed of the crankshaft 15 is not limited to this example. In addition to or instead of the rotor position detection device 50, a detector for detecting the rotation speed of the wheel 3b serving as a driven member may be provided in the straddled vehicle 1.

The control device 60 acquires the amount of operation on the accelerator operator 8 and the rate of increase in the amount of operation based on, for example, a detection result obtained by a throttle position sensor (not shown). The control device 60 includes a starting and electricity generation control section 62, and a combustion control section 63.

The starting and electricity generation control section 62 controls the on/off-operation on each of the switching parts 611 to 616, to control the operation of the magnet type motor generator MG. The starting and electricity generation control section 62 includes a start control section 621 and an electricity generation control section 622.

The combustion control section 63 controls the spark plug 19 and the fuel injection device J, to control the combustion action of the engine EG. The combustion control section 63 controls the spark plug 19 and the fuel injection device J, to control the power of the engine EG. The combustion control section 63 controls the spark plug 19 and the fuel injection device J in accordance with the opening degree of a throttle valve SV which is indicated by a signal outputted from the throttle position sensor 80.

The control device 60 is composed of a computer including a central processing unit (not shown) and a storage device (not shown). The central processing unit executes arithmetic processing based on a control program. The storage device stores data relating to programs and arithmetic operations. The combustion control section 63 and the starting and electricity generation control section 62 including the start control section 621 and the electricity generation control section 622 are implemented by a computer (not shown) and a control program executable by the computer. Thus, below-described operations performed respectively by the combustion control section 63 and by the starting and electricity generation control section 62 including the start control section 621 and the electricity generation control section 622 can be considered as operations performed by the control device 60. The starting and electricity generation control section 62 and the combustion control section 63 may be, for example, either configured as separate devices placed at a distance from each other, or integrated as a single device.

The starter switch 6 is connected to the control device 60. The starter switch 6 is actuated by the driver at a time of starting the engine EG. The main switch 5 supplies electricity to the control device 60 in accordance with an operation on the main switch 5.

The starting and electricity generation control section 62 and the combustion control section 63 of the control device 60 control the engine EG and the magnet type motor generator MG. The starting and electricity generation control section 62 controls the inverter 61.

Start-time characteristics of the straddled vehicle according to the first embodiment will now be described with reference to FIG. 6(a) to (e). FIG. 6(a) to (e) each shows characteristics of the straddled vehicle 1 obtained when the crankshaft rotation speed is increased from zero by the accelerator operator 8 being continuously operated with a maximum amount of operation.

In FIG. 6(a), a drive range of the magnet type motor generator MG, a drive range of the engine EG, and a power transmission range of the power transmission device PT are shown in relation to the rotation speed of the crankshaft 15. In the Figure, R1 represents the rotation speed of the crankshaft 15 at a time of the initial combustion of the engine EG. R2 represents the rotation speed of the crankshaft 15 at a time when the engine EG becomes capable of self-sustaining operation. R3 represents the rotation speed of the crankshaft 15 at a time when the engine EG is idling. A relationship of R1<R2<R3 is satisfied.

FIG. 6(b) shows the relationship of an output torque of the magnet type motor generator MG, an output torque of the engine EG, a torque (EG+MG in the Figure) of the crankshaft 15, and a torque (TT in the Figure) transmitted to the wheel 3b (rear wheel), relative to the rotation speed of the crankshaft 15. The torque of the crankshaft 15 is the sum of the output torque of the engine EG and the output torque of the magnet type motor generator MG. The rear wheel transmission torque TT is represented as a torque in the crankshaft 15 which is obtained by conversion calculation based on a speed reduction ratio. FIG. 6(a) and FIG. 6(b) have the same scale for their horizontal axes.

FIG. 6(c) shows the relationship between the travel distance and time at a time when the straddled vehicle 1 starts traveling. In the Figure, P represents a timing when the travel distance starts increasing.

FIG. 6(d) shows the relationship between the vehicle speed and time at a time when the straddled vehicle 1 starts traveling. In the Figure, Q represents a timing when the vehicle speed starts increasing.

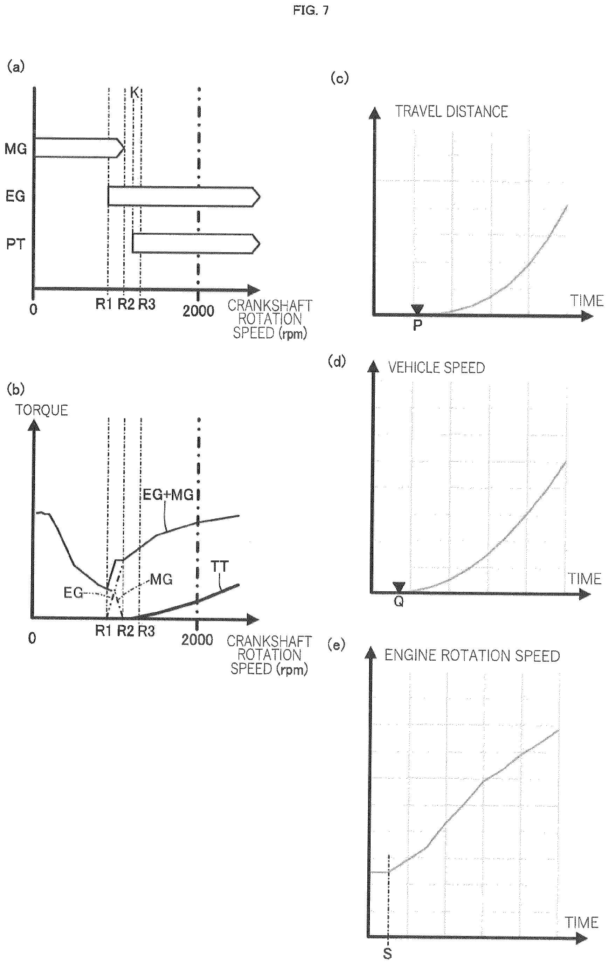

FIG. 6(e) shows the relationship between the rotation speed of the engine EG and time at a time when the straddled vehicle 1 starts traveling. In the Figure, S represents a timing when the accelerator operator 8 is operated (full-open operation). The full-open operation means operating the accelerator operator to the maximum amount at once. FIG. 6(c), FIG. 6(d), and FIG. 6(e) have the same scale for their horizontal axes. In FIG. 7 to FIG. 10 and FIG. 12 to FIG. 16 which will be described later, like in FIG. 6, (a) to (e) show start-time characteristics of straddled vehicles according to second to ninth embodiments and a comparative example.

FIG. 6(a), (b)will be described first. When the rotation speed of the crankshaft 15 is zero, the engine EG is stopped and no power transmission is performed by the power transmission device PT. If, in this state, the accelerator operator 8 is operated to instruct the engine EG to make an output, the magnet type motor generator MG starts rotating the crankshaft 15.

The magnet type motor generator MG uses electricity in the electricity storage device 4 to provide a torque to the crankshaft 15 for increasing the rotation speed of the crankshaft 15, until the rotation speed of the crankshaft 15 increasing from zero and then exceeding the initial combustion rotation speed R1 eventually reaches the self-sustainable rotation speed R2. As the rotation speed of the crankshaft 15 increases, the output torque of the magnet type motor generator MG decreases. In the course of the increase in the rotation speed of the crankshaft 15, the engine EG starts the combustion action. When the rotation speed of the crankshaft 15 is the initial combustion rotation speed R1, an initial combustion is caused. When the rotation speed of the crankshaft 15 is the self-sustainable rotation speed R2, the engine EG becomes capable of self-sustaining operation.

While the rotation speed of the crankshaft 15 is increasing from the initial combustion rotation speed R1 to the self-sustainable rotation speed R2, the magnet type motor generator MG and the engine EG provide torques to the crankshaft 15. As the rotation speed of the crankshaft 15 increases, the torque that the magnet type motor generator MG provides to the crankshaft 15 decreases whereas the torque that the engine EG provides to the crankshaft 15 increases.

In this embodiment, when the rotation speed of the crankshaft 15 exceeds the self-sustainable rotation speed R2, the magnet type motor generator MG stops providing the torque to the crankshaft 15. Due to the torque that the engine EG provides to the crankshaft 15, the rotation speed of the crankshaft 15 increases and reaches the idling rotation speed R3. If, in this state, the accelerator operator 8 is further operated to instruct the engine EG to make an output, the engine EG increases the rotation speed of the crankshaft 15. Accordingly, the output torque of the engine EG increases. When the rotation speed of the crankshaft 15 is a rotation speed K that is higher than the idling rotation speed R3 and lower than 2000 rpm, the power transmission device PT starts power transmission between the crankshaft 15 and the wheel 3b. In this embodiment, the power transmission between the crankshaft 15 and the wheel 3b is started by the clutch CL being brought in. As the rotation speed of the crankshaft 15 increases, the rear wheel transmission torque TT increases.

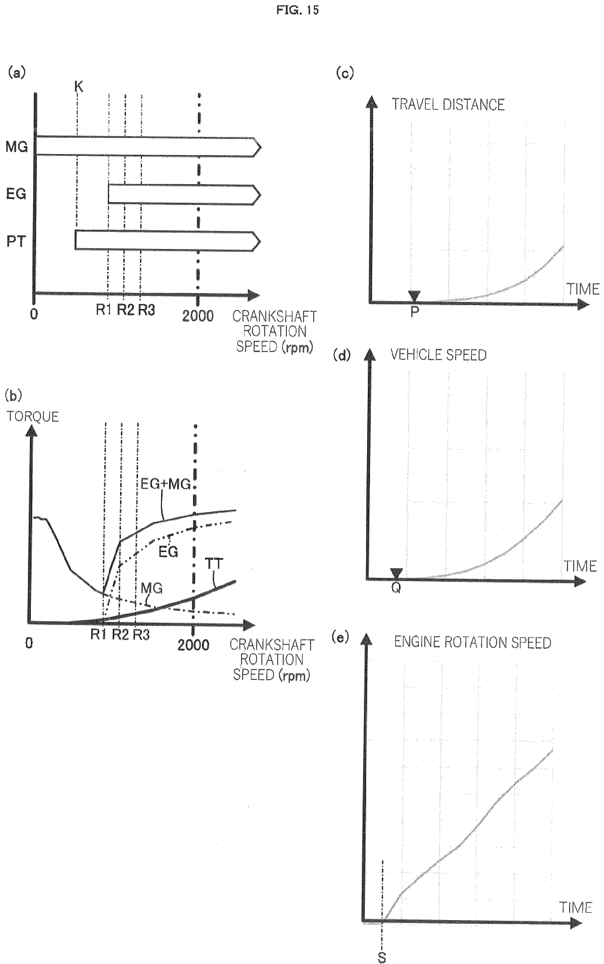

In this embodiment, before the rotation speed of the crankshaft 15 reaches 2000 rpm, the engine combustion action as well as the power transmission between the crankshaft 15 and the wheel 3b is started. Thus, before the rotation speed of the crankshaft 15 reaches 2000 rpm, the wheel 3b is driven by power of the crankshaft 15 caused by the combustion of the engine EG. This enables the straddled vehicle 1 to move forward with a high responsiveness to a departure operation. To be specific, at a timing S shown in FIG. 6(e), the accelerator operator 8 is operated, and accordingly the engine rotation speed starts increasing. Then, at a timing Q shown in FIG. 6(d), the vehicle speed starts increasing, and at a timing P shown in FIG. 6(c), the travel distance starts increasing. Since the straddled vehicle 1 has a high responsiveness, a time interval S-Q between the timing S and the timing Q is short, and a time interval S-P between the timing S and the timing P is short, too. This is obvious from the contrast with time intervals S-Q, S-P in the straddled vehicle according to the comparative example which will be described later with reference to FIG. 15.

In the first embodiment, the transmission start rotation speed K is higher than the idling rotation speed R3 and lower than 2000 rpm. The transmission start rotation speed K means the rotation speed of the crankshaft 15 at which power transmission between the crankshaft 15 and the wheel 3b is started. The transmission start rotation speed K is just required to be lower than 2000 rpm, and any other limitation is not particularly put thereon. Preferably, the transmission start rotation speed K is higher than the idling rotation speed R3 and lower than an idling over-rotation speed. The idling over-rotation speed is higher than the idling rotation speed R3 and lower than 2000 rpm.

The straddled vehicles 1 according to the second to ninth embodiments will be described below. In the second to ninth embodiments, components identical to or corresponding to the components in the first embodiment will be respectively denoted by the same reference signs as the reference signs given to the identical or corresponding elements in the first embodiment. The following descriptions of the second to ninth embodiments mainly deal with differences from the first embodiment. Descriptions of the same parts as in the first embodiment will be omitted.

### <Second Embodiment>

In the second embodiment, as shown in FIG. 7(a), the transmission start rotation speed K is higher than the self-sustainable rotation speed R2 and lower than the idling rotation speed R3. Thus, as shown in FIG. 7(b), the rear wheel transmission torque TT is caused by the power transmission device PT in a period from when the rotation speed of the crankshaft 15 exceeds the self-sustainable rotation speed R2 to when the rotation speed of the crankshaft 15 reaches the idling rotation speed R3. The rear wheel transmission torque TT increases as the rotation speed of the crankshaft 15 increases.

In a case where the rear wheel transmission torque TT can be caused under the condition that the rotation speed of the crankshaft 15 is lower than the idling rotation speed R3, the straddled vehicle 1 may be configured such that a creeping phenomenon can be caused by the rear wheel transmission torque TT, or may be configured such that energy of the rear wheel transmission torque TT can be consumed by friction or the like in the power transmission device PT (the clutch CL and/or the transmission TR) in order to avoid that the rear wheel transmission torque TT makes the straddled vehicle 1 travel. In the case where the rear wheel transmission torque TT can be caused under the condition that the rotation speed of the crankshaft 15 is lower than the idling rotation speed R3, the straddled vehicle 1 may be configured such that whether or not power transmission between the crankshaft 15 and the wheel 3b is allowed (in other words, whether or not the rear wheel transmission torque TT makes the straddled vehicle 1 travel) is switchable in accordance with a driver's operation.

The straddled vehicle 1 according to the second embodiment is also capable of moving forward with a high responsiveness to a departure operation. Accordingly, time intervals S-Q, S-P (see FIG. 7(c)to (e)) are respectively shorter than the time intervals S-Q, S-P (see FIG. 16(c) to (e)) in the straddled vehicle according to the comparative example.

### <Third Embodiment>

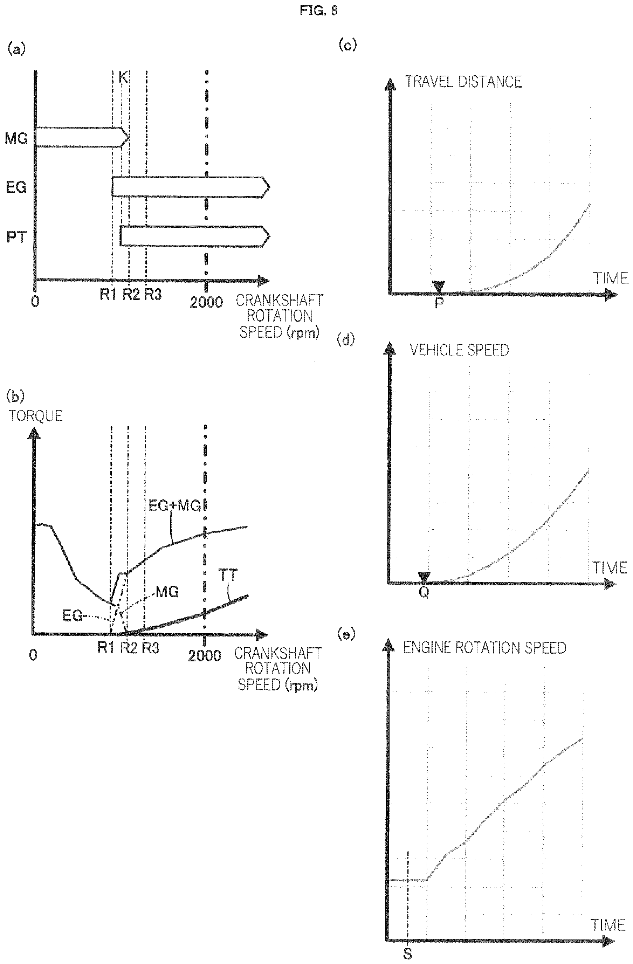

In the third embodiment, as shown in FIG. 8(a), the transmission start rotation speed K is higher than the initial combustion rotation speed R1 and lower than the self-sustainable rotation speed R2. Thus, as shown in FIG. 8(b), the rear wheel transmission torque TT is caused by the power transmission device PT in a period from when the rotation speed of the crankshaft 15 exceeds the initial combustion rotation speed R1 to when the rotation speed of the crankshaft 15 reaches the self-sustainable rotation speed R2. The rear wheel transmission torque TT increases as the rotation speed of the crankshaft 15 increases.

The straddled vehicle 1 according to the third embodiment is also capable of moving forward with a high responsiveness to a departure operation. Accordingly, time intervals S-Q, S-P (see FIG. 8(c) to (e)) are respectively shorter than the time intervals S-Q, S-P (see FIG. 16(c)to (e)) in the straddled vehicle according to the comparative example.

### <Fourth Embodiment>

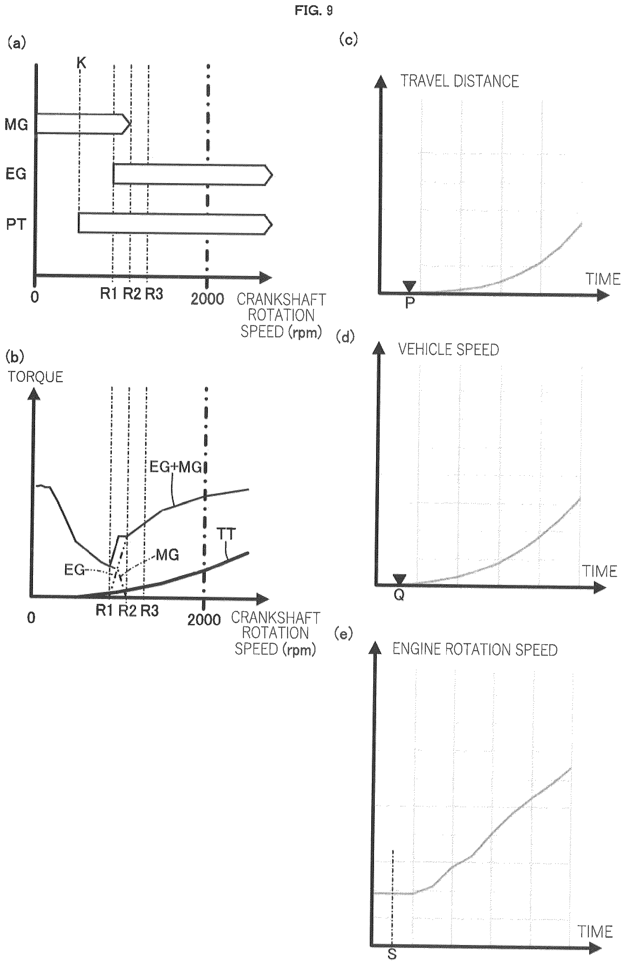

In the fourth embodiment, as shown in FIG. 9(a), the transmission start rotation speed K is lower than the initial combustion rotation speed R1. Thus, as shown in FIG. 9(b), the rear wheel transmission torque TT is caused by the magnet type motor generator MG before the rotation speed of the crankshaft 15 reaches the initial combustion rotation speed R1. The rear wheel transmission torque TT increases as the rotation speed of the crankshaft 15 increases.

In a case where the rear wheel transmission torque TT can be caused by the magnet type motor generator MG before the combustion action of the engine EG is performed (that is, before the rotation speed of the crankshaft 15 reaches the initial combustion rotation speed R1), the straddled vehicle 1 may be configured such that a creeping phenomenon can be caused by the rear wheel transmission torque TT, or may be configured such that energy of the rear wheel transmission torque TT can be consumed by friction or the like in the power transmission device PT (the clutch CL and/or the transmission TR) in order to avoid that the rear wheel transmission torque TT makes the straddled vehicle 1 travel. In the case where the rear wheel transmission torque TT can be caused by the magnet type motor generator MG before the combustion action of the engine EG is performed, the straddled vehicle 1 may be configured such that whether or not power transmission between the crankshaft 15 and the wheel 3b is allowed (in other words, whether or not the rear wheel transmission torque TT makes the straddled vehicle 1 travel) is switchable in accordance with a driver's operation.

The straddled vehicle 1 according to the fourth embodiment is also capable of moving forward with a high responsiveness to a departure operation. Accordingly, time intervals S-Q, S-P (see FIG. 9(c)to (e)) are respectively shorter than the time intervals S-Q, S-P (see FIG. 16(c) to (e)) in the straddled vehicle according to the comparative example.

### <Fifth Embodiment>

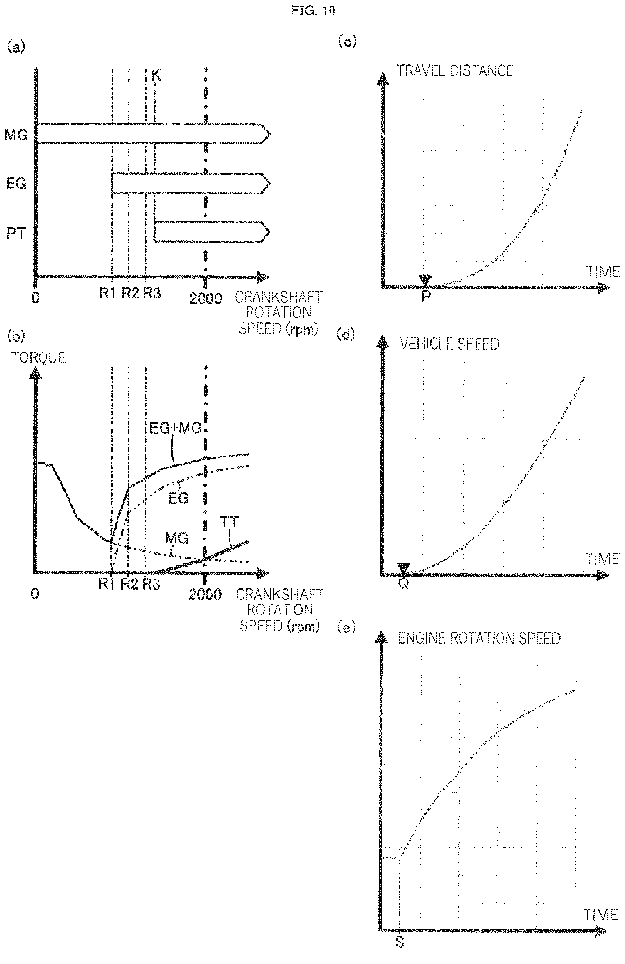

In the fifth embodiment, like in the first embodiment, the transmission start rotation speed K is higher than the idling rotation speed R3 and lower than 2000 rpm (see FIG. 10(a)). The fifth embodiment, however, is different from the first embodiment in that the magnet type motor generator MG keeps providing a torque to the crankshaft 15 even after the rotation speed of the crankshaft 15 exceeds the self-sustainable rotation speed R2, and also in that the magnet type motor generator MG keeps providing the torque to the crankshaft 15 until the rotation speed of the crankshaft 15 exceeds at least 2000 rpm.

When the rotation speed of the crankshaft 15 exceeds the initial combustion rotation speed R1, the output torque of the engine EG starts increasing from zero. As the rotation speed of the crankshaft 15 increases, the output torque of the engine EG increases. In other words, the output torque of the engine EG is low in a region where the rotation speed of the crankshaft 15 is low. The lower the rotation speed of the crankshaft 15 is, the higher the output torque of the magnet type motor generator MG is. The output torque of the magnet type motor generator MG is added to the output torque of the engine EG. As a result, the torque (EG+MG) of the crankshaft 15 increases in a region where the rotation speed of the crankshaft 15 is higher than the initial combustion rotation speed R1 and lower than 2000 rpm. Power transmission between the crankshaft 15 and the wheel 3b is started when the rotation speed of the crankshaft 15 is lower than 2000 rpm. Consequently, a higher torque is transmitted to the wheel 3b when the rotation speed of the crankshaft 15 is lower than 2000 rpm. This enables the straddled vehicle 1 to move forward with a higher responsiveness to a departure operation. Accordingly, time intervals S-Q, S-P (see FIG. 10(c) to (e)) are respectively shorter than the time intervals S-Q, S-P (see FIG. 16(c) to (e)) in the straddled vehicle according to the comparative example. In the fifth embodiment, not only a high responsiveness but also a high acceleration performance can be obtained.

In the fifth embodiment, the magnet type motor generator MG keeps providing a torque to the crankshaft 15 even after the rotation speed of the crankshaft 15 exceeds the self-sustainable rotation speed R2. In addition, the magnet type motor generator MG keeps providing the torque to the crankshaft 15 until the rotation speed of the crankshaft 15 exceeds at least 2000 rpm. Since the magnet type motor generator MG uses electricity in the electricity storage device 4 to provide the torque to the crankshaft 15, providing the torque to the crankshaft 15 for a prolonged time period results in increased electricity consumption from the electricity storage device 4. In the fifth embodiment, however, the transmission start rotation speed K is lower than 2000 rpm, and therefore the straddled vehicle 1 can be configured such that the power transmission device PT can continue power transmission between the crankshaft 15 and the wheel 3b even if the rotation speed of the crankshaft 15 falls below 2000 rpm during deceleration of the straddled vehicle 1. That is, the straddled vehicle 1 can be configured to be capable of regeneration operation even when the rotation speed of the crankshaft 15 falls below 2000 rpm during deceleration of the straddled vehicle 1.

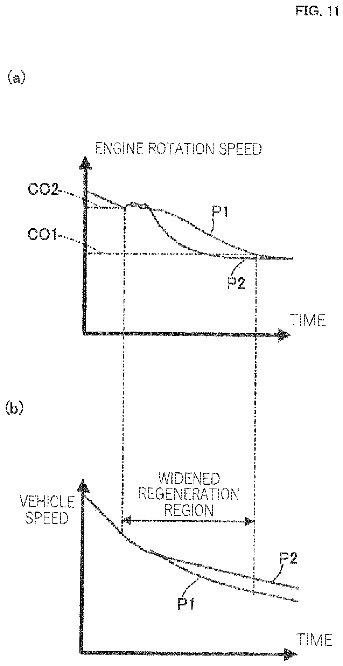

FIG. 11(a), (b) show deceleration-time characteristics of the straddled vehicle 1 according to the fifth embodiment. P1 represents characteristics of the straddled vehicle 1 according to the fifth embodiment, and P2 represents characteristics of the straddled vehicle according to the comparative example. CO1 represents the rotation speed of the crankshaft 15 at a time when the power transmission allowed by the power transmission device PT is terminated during deceleration (for example, the rotation speed of the crankshaft 15 at a time of clutch-out), in the fifth embodiment. CO2 represents the rotation speed of the crankshaft at a time when power transmission allowed by the power transmission device is terminated during deceleration, in the comparative example. In the straddled vehicle according to the comparative example, the transmission start rotation speed K is higher than 2000 rpm. A relationship of CO2 > 2000 rpm > CO1 is satisfied.

In the straddled vehicle 1 according to the fifth embodiment, the power transmission device PT continues the power transmission even if the rotation speed of the crankshaft 15 falls below CO2 during deceleration. The power transmission device PT continues the power transmission until the rotation speed of the crankshaft 15 reaches CO1 (see P1 in the Figure). While the power transmission device PT is performing the power transmission, the crankshaft 15 is rotated by rotation of the wheel 3b. Thus, the magnet type motor generator MG can generate electricity. In the straddled vehicle according to the comparative example, the power transmission device PT terminates the power transmission if the rotation speed of the crankshaft reaches CO2 during deceleration (see P2 in the Figure). The straddled vehicle 1 according to the fifth embodiment, which has a wider regeneration region than that of the straddled vehicle according to the comparative example, is capable of driving the magnet type motor generator MG until the crankshaft 15 reaches a higher rotation speed by using the electricity in the electricity storage device 4.

### <Sixth Embodiment>

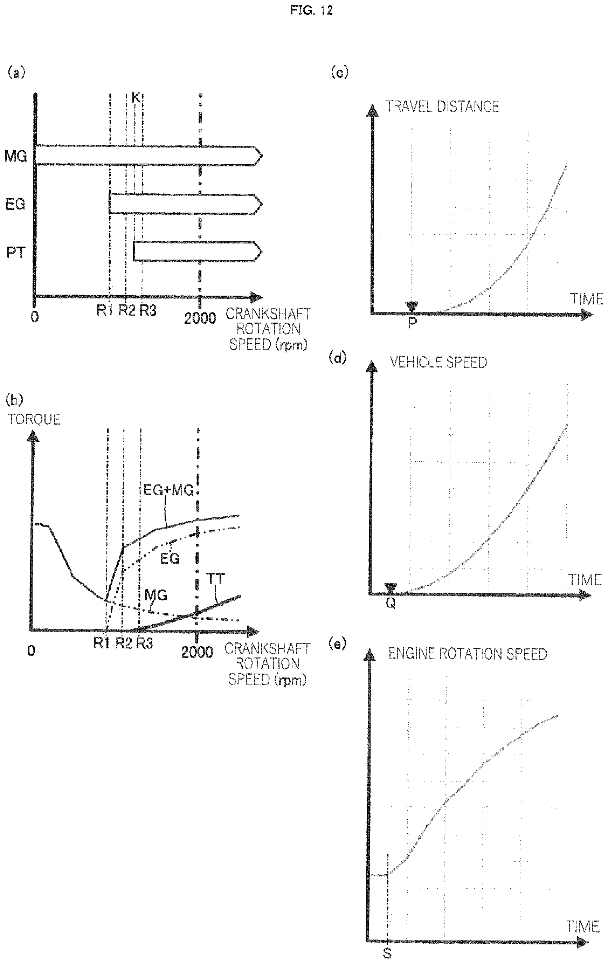

In the sixth embodiment, like in the second embodiment, the transmission start rotation speed K is higher than the self-sustainable rotation speed R2 and lower than the idling rotation speed R3 (see FIG. 12(a)). The sixth embodiment, however, is different from the second embodiment in that the magnet type motor generator MG keeps providing a torque to the crankshaft 15 even after the rotation speed of the crankshaft 15 exceeds the self-sustainable rotation speed R2, and also in that the magnet type motor generator MG keeps providing the torque to the crankshaft 15 until the rotation speed of the crankshaft 15 exceeds at least 2000 rpm.

In the sixth embodiment, as shown in FIG. 12(b), the rear wheel transmission torque TT is caused by the power transmission device PT in a period from when the rotation speed of the crankshaft 15 exceeds the self-sustainable rotation speed R2 to when the rotation speed of the crankshaft 15 reaches the idling rotation speed R3. The rear wheel transmission torque TT increases as the rotation speed of the crankshaft 15 increases. Thus, the straddled vehicle 1 according to the sixth embodiment is also capable of moving forward with a high responsiveness to a departure operation. Accordingly, time intervals S-Q, S-P (see FIG. 12(c) to (e)) are respectively shorter than the time intervals S-Q, S-P (see FIG. 16(c) to (e)) in the straddled vehicle according to the comparative example.

### <Seventh Embodiment>

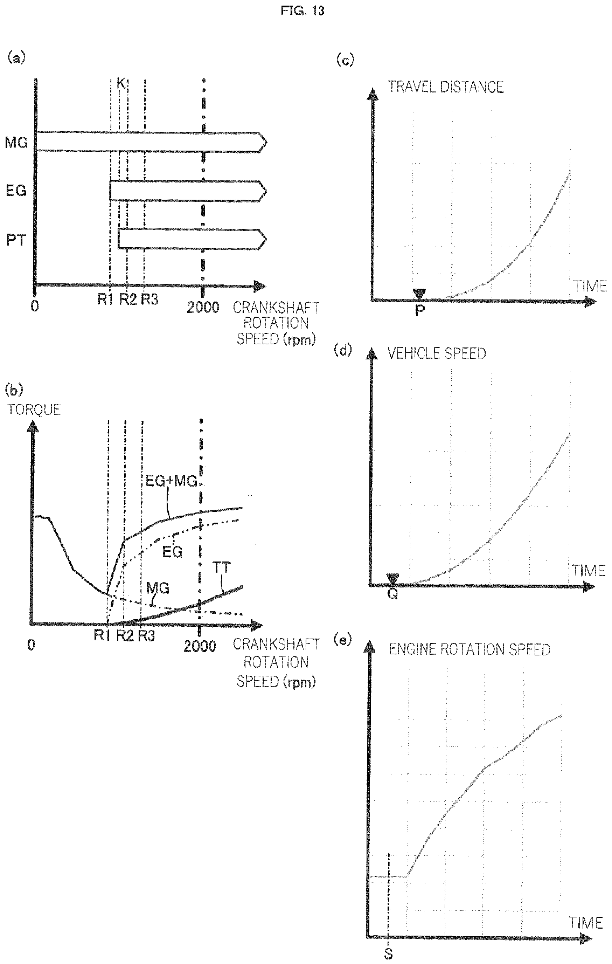

In the seventh embodiment, like in the third embodiment, the transmission start rotation speed K is higher than the initial combustion rotation speed R1 and lower than the self-sustainable rotation speed R2 (see FIG. 13(a)). The seventh embodiment, however, is different from the third embodiment in that the magnet type motor generator MG keeps providing a torque to the crankshaft 15 even after the rotation speed of the crankshaft 15 exceeds the self-sustainable rotation speed R2, and also in that the magnet type motor generator MG keeps providing the torque to the crankshaft 15 until the rotation speed of the crankshaft 15 exceeds at least 2000 rpm.

In the seventh embodiment, as shown in FIG. 13(b), the rear wheel transmission torque TT is caused by the power transmission device PT in a period from when the rotation speed of the crankshaft 15 exceeds the initial combustion rotation speed R1 to when the rotation speed of the crankshaft 15 reaches the self-sustainable rotation speed R2. The rear wheel transmission torque TT increases as the rotation speed of the crankshaft 15 increases. Thus, the straddled vehicle 1 according to the seventh embodiment is also capable of moving forward with a high responsiveness to a departure operation. Accordingly, time intervals S-Q, S-P (see FIG. 13(c) to (e)) are respectively shorter than the time intervals S-Q, S-P (see FIG. 16(c) to (e)) in the straddled vehicle according to the comparative example.

### <Eighth Embodiment>

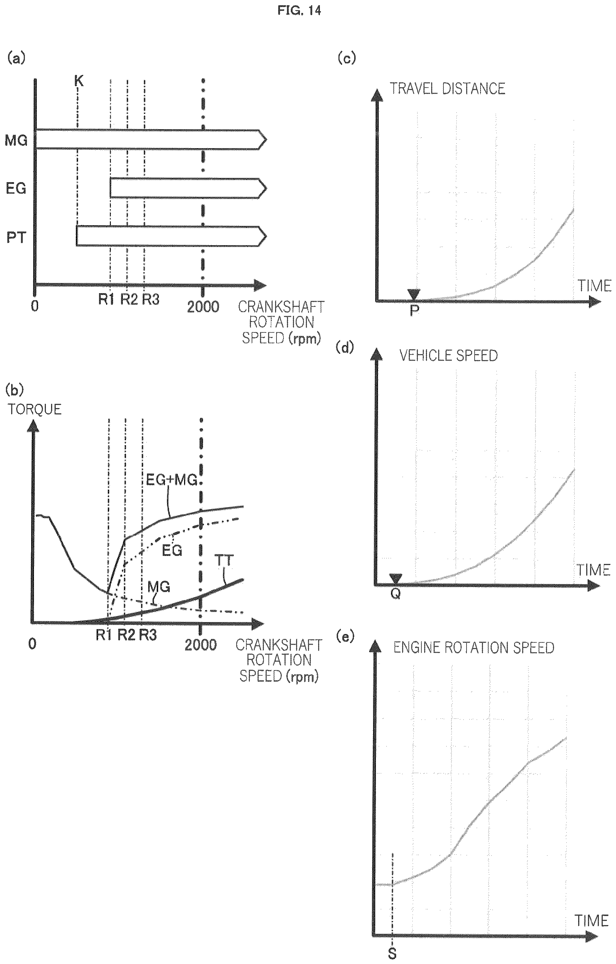

In the eighth embodiment, like in the fourth embodiment, the transmission start rotation speed K is lower than the initial combustion rotation speed R1 (see FIG. 14(a)). The eighth embodiment, however, is different from the fourth embodiment in that the magnet type motor generator MG keeps providing a torque to the crankshaft 15 even after the rotation speed of the crankshaft 15 exceeds the self-sustainable rotation speed R2, and also in that the magnet type motor generator MG keeps providing the torque to the crankshaft 15 until the rotation speed of the crankshaft 15 exceeds at least 2000 rpm.

In the eighth embodiment, as shown in FIG. 14(b), the rear wheel transmission torque TT is caused by the magnet type motor generator MG before the rotation speed of the crankshaft 15 reaches the initial combustion rotation speed R1. The rear wheel transmission torque TT increases as the rotation speed of the crankshaft 15 increases. Thus, the straddled vehicle 1 according to the eighth embodiment is also capable of moving forward with a high responsiveness to a departure operation. Accordingly, time intervals S-Q, S-P (see FIG. 14(c)to (e)) are respectively shorter than the time intervals S-Q, S-P (see FIG. 16(c) to (e)) in the straddled vehicle according to the comparative example.

### <Ninth Embodiment>

In the ninth embodiment, like in the eighth embodiment, the transmission start rotation speed K is lower than the initial combustion rotation speed R1 (see FIG. 15(a)). In the ninth embodiment, like in the eighth embodiment, the magnet type motor generator MG keeps providing a torque to the crankshaft 15 until the rotation speed of the crankshaft 15 exceeds at least 2000 rpm (see FIG. 15(a)). Thus, characteristics shown in FIG. 15(a), (b) are the same as the characteristics of the eighth embodiment shown in FIG. 14(a), (b).

The ninth embodiment is different from the eighth embodiment in that the idling of the engine EG is stopped and the idling of the engine EG is not performed if a predetermined idling stop condition is satisfied (so-called idling stop). Characteristics shown in FIG. 15(c) to (e) are characteristics at a time of idling stop, and are different from the characteristics of the eighth embodiment shown in FIG. 14(c) to (e). In the ninth embodiment, as shown in FIG. 15(e), the rotation speed of the engine EG, that is, the rotation speed of the crankshaft 15, is zero until the timing S when the accelerator operator 8 is operated comes. If the accelerator operator 8 is operated, the engine EG is restarted. Specifically, if the accelerator operator 8 is operated, the magnet type motor generator MG provides a torque to the crankshaft 15, and in addition the combustion action of the engine EG is started. As a result, the rotation speed of the crankshaft 15 increases. In the course of the increase in the rotation speed of the crankshaft 15, the power transmission device PT quickly starts power transmission, because the transmission rotation speed K is lower than the initial combustion rotation speed R1. Consequently, at the timing Q, the vehicle speed starts increasing, and at the timing P, the travel distance starts increasing. The straddled vehicle 1 according to the ninth embodiment has a high responsiveness also in a case of departing from an idling stop state in accordance with an operation on the accelerator operator 8. Accordingly, time intervals S-Q, S-P (see FIG. 15(c) to (e)) are respectively shorter than the time intervals S-Q, S-P (see FIG. 16(c) to (e)) in the straddled vehicle according to the comparative example.

### <Comparative Example>

In the straddled vehicle according to the comparative example, like in the first embodiment, the magnet type motor generator provides a torque to the crankshaft until the rotation speed of the crankshaft reaches the self-sustainable rotation speed R2. The straddled vehicle according to the comparative example is different from the first embodiment in that the transmission start rotation speed K is higher than 2000 rpm (see FIG. 16(a)). Thus, the rear wheel transmission torque TT is caused after the rotation speed of the crankshaft exceeds 2000 rpm (see FIG. 16(b)). In other words, it takes a relatively long time to cause the rear wheel transmission torque TT after the driver operates the accelerator operator. Accordingly, the time intervals S-Q, S-P (see FIG. 16(c) to (e)) in the straddled vehicle according to the comparative example are longer than those of the above-described embodiments.

As thus far described, in the straddled vehicles 1 according to the first to ninth embodiments, the power transmission device PT allows power transmission between the crankshaft 15 and the wheel 3b before the rotation speed of the crankshaft 15 reaches 2000 rpm during an increase in the rotation speed of the crankshaft 15. That is, the transmission start rotation speed K is lower than 2000 rpm. In the straddled vehicle 1 according to each of the first to ninth embodiments, if the accelerator operator 8 is operated so as to instruct the engine EG to make an output in a state where the combustion action of the engine EG is stopped, the magnet type motor generator MG causes the crankshaft 15 to rotate using electricity in the electricity storage device 4 with the combustion action of the engine EG stopped, and before the rotation speed of the crankshaft 15 reaches 2000 rpm, a combustion is supplied to the engine EG so that the combustion action of the engine EG is started. Before the increasing rotation speed of the crankshaft 15 reaches 2000 rpm, the wheel 3b is driven by power of the crankshaft 15 caused by the combustion of the engine EG. The straddled vehicle 1, which includes the magnet type motor generator MG, is capable of moving forward with a high responsiveness to an operation on the accelerator operator 8. Although the start-time characteristics shown in FIG. 6 to FIG. 10 and in FIG. 12 to FIG. 16 are the characteristics obtained in a case where an operation on the accelerator operator is the full-open operation, characteristics obtained in a case where an operation on the accelerator operator is a slow-open operation has the same tendency as that of the characteristics obtained in a case where an operation on the accelerator operator is the full-open operation. The slow-open operation means operating the accelerator operator with the operation amount gradually increasing over time. Thus, in the vehicle according to each of the embodiments, also when the slow-open operation is performed on the accelerator operator, the power transmission is started more quickly, the speed of forward movement becomes positive from zero more quickly, and the vehicle moves forward more quickly, as compared to the vehicle according to the comparative example. Although the above-described embodiments adopt a drum type centrifugal clutch as the clutch, a belt clutch or a centrifugal multiple-disc clutch may be adopted instead of the drum type centrifugal clutch.

### Reference Signs List

- 1: straddled vehicle (vehicle)
- 3b: wheel (driven member)
- 4: electricity storage device
- 8: accelerator operator
- 12: cylinder
- 13: piston
- 15: crankshaft
- 30: rotor
- 40: stator
- 60: control device
- 61: inverter
- 611-616: switching part
- EG: engine
- MG: magnet type motor generator
- PT: power transmission device

## Claims

1. A vehicle comprising:
an engine (EG) including a crankshaft (15), the engine (EG) being configured to output power through the crankshaft (15);
a magnet type motor generator (MG) including a rotor (30) and a stator (40), the rotor (30) including a permanent magnet and being connected to the crankshaft (15) such that power transmission between the rotor (30) and the crankshaft (15) is allowed without interposition of a clutch and such that the rotor (30) rotates with a fixed speed ratio relative to the crankshaft (15), the stator (40) being arranged opposed to the rotor (30), the magnet type motor generator (MG) being configured to rotate the crankshaft (15) at least when starting a combustion action of the engine (EG) and to generate electricity when being driven by the engine (EG);
an electricity storage device (4) configured to supply and receive electricity to and from the magnet type motor generator (MG);
an accelerator operator (8) configured to be operated so as to instruct the engine (EG) to make an output;
a driven member (3b) configured to be driven by power outputted from the engine (EG) to make the vehicle move forward;
a power transmission device (PT) configured to transmit power from the crankshaft (15) to the driven member (3b), the power transmission device (PT) including a clutch (CL); and
a control section (60) configured to energize the magnet type motor generator (MG) to rotate the crankshaft (15), and to supply a fuel to the engine (EG) to start the combustion action of the engine (EG) while the crankshaft (15) is rotating, **characterized in that**
the vehicle is configured to lean into turns,
the vehicle is configured to, when taking a turn, lean toward the inside of a curve in order to oppose a centrifugal force acting on the vehicle at a time of the turn,
the power transmission device (PT) is configured to disconnect power transmission when a rotation speed of the crankshaft (15) is in a low-speed region less than 2000 rpm then allowing power transmission between the crankshaft (15) and the driven member (3b) before a rotation speed of the crankshaft (15) reaches 2000 rpm when the rotation speed of the crankshaft is out of the low-speed region during an increase in the rotation speed of the crankshaft (15) independent of a driver's operation on the clutch (CL), the low-speed region having an upper limit value that corresponds to a clutch-in rotation speed in the clutch, wherein
when the rotation speed of the crankshaft (15) is zero, the engine (EG) is stopped and no power transmission is performed by the power transmission device (PT), and if, in this state, the accelerator operator (8) is operated to instruct the engine (EG) to make an output, the control section (60) is configured to control the magnet type motor generator (MG) to start rotating the crankshaft (15) using electricity from the electricity storage device (4) with the combustion action of the engine (EG), wherein
the magnet type motor generator (MG) is configured to provide a torque to the crankshaft (15) for increasing the rotation speed of the crankshaft (15), and
before the rotation speed of the crankshaft (15) reaches 2000 rpm, the control section (60) is configured to supply a fuel to the engine (EG) and starts the combustion action of the engine (EG), and
the driven member (3b) is configured to be driven by power of the crankshaft (15) caused by combustion of the engine (EG) before the rotation speed of the crankshaft (15) reaches 2000 rpm during an increase in the rotation speed of the crankshaft (15).

2. The vehicle according to claim 1, wherein
The clutch has a clutch-stall rotation speed of 3500 rpm or more and 6700 rpm or less.

3. The vehicle according to claim 1 or 2, wherein
The magnetic type motor generator causes the crankshaft to rotate until the rotation speed of the crankshaft reaches a clutch-stall rotation speed.

4. The vehicle according to any one of claims 1 to 3, wherein
before the rotation speed of the crankshaft (15) reaches 2000 rpm during an increase in the rotation speed of the crankshaft (15), the driven member (3b) is configured to be driven by both power of the crankshaft (15) caused by combustion of the engine (EG) and power of the crankshaft (15) caused by driving of the magnet type motor generator (MG).

5. The vehicle according to claim 4, wherein
the power transmission device (PT) is configured to allow power transmission between the crankshaft (15) and the driven member (3b) after the combustion action of the engine (EG) is started during an increase in the rotation speed of the crankshaft (15) and before the rotation speed of the crankshaft (15) reaches 2000 rpm,
wherein
when the rotation speed of the crankshaft (15) is zero, the engine (EG) is stopped and no power transmission is performed by the power transmission device (PT), and if, in this state, the accelerator operator (8) is operated to instruct the engine (EG) to make an output, the control section (60) is configured to control the magnet type motor generator (MG) to start rotating the crankshaft (15) using electricity from the electricity storage device (4) with the combustion action of the engine (EG) stopped, wherein the magnet type motor generator (MG) is configured to provide a torque to the crankshaft (15) for increasing the rotation speed of the crankshaft (15),
and before the rotation speed of the crankshaft (15) reaches 2000 rpm, the control section (60) is configured to supply a fuel to the engine (EG) and starts the combustion action of the engine (EG), and
the driven member (3b) is configured to be driven by both power of the crankshaft (15) caused by combustion of the engine (EG) and power of the magnet type motor generator (MG), after the combustion action of the engine (EG) is started during an increase in the rotation speed of the crankshaft (15) and before the rotation speed of the crankshaft (15) reaches 2000 rpm.

6. The vehicle according to claim 5, wherein
the power transmission device (PT) is configured to allow power transmission between the crankshaft (15) and the driven member (3b) before the combustion action of the engine (EG) is started,
wherein when the rotation speed of the crankshaft (15) is zero, the engine (EG) is stopped and no power transmission is performed by the power transmission device (PT), and if, in this state, the accelerator operator (8) is operated to instruct the engine (EG) to make an output, the control section (60) is configured to control the magnet type motor generator (MG) to start rotating the crankshaft (15) using electricity from the electricity storage device (4) with the combustion action of the engine (EG) stopped, wherein the magnet type motor generator (MG) is configured to provide a torque to the crankshaft (15) for increasing the rotation speed of the crankshaft (15),
and before the rotation speed of the crankshaft (15) reaches 2000 rpm during an increase in the rotation speed of the crankshaft (15), the control section (60) is configured to supply a fuel to the engine (EG) and starts the combustion action of the engine (EG), and
the driven member (3b) is configured to be driven by power of the crankshaft (15) caused by the magnet type motor generator (MG) before the combustion action of the engine (EG) is started, and is driven by both power of the crankshaft (15) caused by combustion of the engine (EG) and power of the magnet type motor generator (MG) after the combustion action of the engine (EG) is started and before the rotation speed of the crankshaft (15) reaches 2000 rpm.

7. The vehicle according to any one of claims 1 to 6, wherein
the power transmission device (PT) is configured to allow power transmission between the crankshaft (15) and the driven member (3b) before the rotation speed of the crankshaft (15) reaches an idling over-rotation speed during an increase in the rotation speed of the crankshaft (15), the idling over-rotation speed being higher than an idling rotation speed and lower than 2000 rpm,
wherein when the rotation speed of the crankshaft (15) is zero, the engine (EG) is stopped and no power transmission is performed by the power transmission device (PT), and if, in this state, the accelerator operator (8) is operated to instruct the engine (EG) to make an output, the control section (60) is configured to control the magnet type motor generator (MG) to start rotating the crankshaft (15) using electricity from the electricity storage device (4) with the combustion action of the engine (EG) stopped, wherein the magnet type motor generator (MG) is configured to provide a torque to the crankshaft (15) for increasing the rotation speed of the crankshaft (15),
and before the rotation speed of the crankshaft (15) reaches the idling over-rotation speed during an increase in the rotation speed of the crankshaft (15), the control section (60) configured to supply a fuel to the engine (EG) and starts the combustion action of the engine (EG), and
the driven member (3b) is configured to be driven by power of the crankshaft (15) caused by combustion of the engine (EG) before the rotation speed of the crankshaft (15) reaches the idling over-rotation speed during an increase in the rotation speed of the crankshaft (15).

8. The vehicle according to any one of claims 1 to 7, wherein
in response to satisfaction of a predetermined idling stop condition, the control section (60) is configured to stop the combustion action of the engine (EG), and in response to the accelerator operator (8) being operated so as to instruct the engine (EG) to make an output, the control section (60) is configured to control the magnet type motor generator (MG) such that the magnet type motor generator (MG) causes the crankshaft (15) to rotate using electricity in the electricity storage device (4) with the combustion action of the engine (EG) stopped, and supplies a fuel to the engine (EG) and starts the combustion action of the engine (EG).

## Patentansprüche

1. Ein Fahrzeug, das folgende Merkmale aufweist:
einen Motor (EG), der eine Kurbelwelle (15) umfasst, wobei der Motor (EG) dazu konfiguriert ist, Leistung durch die Kurbelwelle (15) auszugeben;
einen Magnettypmotorgenerator (MG), der einen Rotor (30) und einen Stator (40) umfasst, wobei der Rotor (30) einen Permanentmagneten umfasst und mit der Kurbelwelle (15) derart verbunden ist, dass eine Leistungsübertragung zwischen dem Rotor (30) und der Kurbelwelle (15) ohne Zwischenschaltung einer Kupplung möglich ist, und derart, dass der Rotor (30) sich mit einem festen Drehzahlverhältnis relativ zu der Kurbelwelle (15) dreht, wobei der Stator (40) gegenüberliegend zu dem Rotor (30) angeordnet ist, wobei der Magnettypmotorgenerator dazu konfiguriert ist, die Kurbelwelle (15) zumindest dann zu drehen, wenn ein Verbrennungsvorgang des Motors (EG) gestartet wird, und Elektrizität zu erzeugen, wenn derselbe durch den Motor (EG) angetrieben wird;
eine Elektrizitätsspeichervorrichtung (4), die dazu konfiguriert ist, dem Magnettypmotorgenerator (MG) Elektrizität zuzuführen und diese von demselben zu empfangen;
eine Beschleunigerbedienvorrichtung (8), die dazu konfiguriert ist, bedient zu werden, um den Motor (EG) anzuweisen, eine Ausgabe zu tätigen;
ein angetriebenes Bauglied (3b), das dazu konfiguriert ist, durch eine aus dem Motor (EG) ausgegebene Leistung angetrieben zu werden, um zu bewirken, dass sich das Fahrzeug nach vorne bewegt;
eine Leistungsübertragungsvorrichtung (PT), die dazu konfiguriert ist, Leistung von der Kurbelwelle (15) zu dem angetriebenen Bauglied (3b) zu übertragen, wobei die Leistungsübertragungsvorrichtung (PT) eine Kupplung (CL) umfasst; und einen Steuerabschnitt (60), der dazu konfiguriert ist, den Magnettypmotorgenerator (MG) mit Energie zu versorgen, um die Kurbelwelle (15) zu drehen, und dem Motor (EG) einen Kraftstoff zuzuführen, um den Verbrennungsvorgang des Motors (EG) zu starten, während sich die Kurbelwelle (15) dreht, **dadurch gekennzeichnet, dass**
das Fahrzeug dazu konfiguriert ist, sich bei Kurvenfahrt zu neigen,
das Fahrzeug dazu konfiguriert ist, sich bei Kurvenfahrt hin zu der Innenseite einer Kurve zu neigen, um einer Zentrifugalkraft, die zum Zeitpunkt der Kurvenfahrt auf das Fahrzeug wirkt, entgegenzuwirken,
wobei die Leistungsübertragungsvorrichtung (PT) dazu konfiguriert ist, eine Leistungsübertragung zu trennen, wenn eine Drehzahl der Kurbelwelle (15) in einem Niedrigdrehzahlbereich von weniger als 2000 U/min ist, wobei eine Leistungsübertragung zwischen der Kurbelwelle (15) und dem angetriebenen Bauglied (3b) erlaubt ist, bevor eine Drehzahl der Kurbelwelle (15) 2000 U/min erreicht, wenn die Drehzahl der Kurbelwelle außerhalb des Niedrigdrehzahlbereiches liegt, während einer Erhöhung der Drehzahl der Kurbelwelle (15), unabhängig von der Betätigung der Kupplung (CL) durch einen Fahrer, wobei der Niedriggeschwindigkeitsbereich einen oberen Grenzwert aufweist, der einer eingekuppelten Drehzahl in der Kupplung entspricht, wobei
dann, wenn die Drehzahl der Kurbelwelle (15) gleich null ist, der Motor (EG) gestoppt wird und keine Leistungsübertragung durch die Leistungsübertragungsvorrichtung (PT) ausgeführt wird, und wobei dann, wenn in diesem Zustand die Beschleunigerbedienungsvorrichtung (8) betätigt wird, um den Motor (EG) anzuweisen, eine Ausgabe zu tätigen, der Steuerabschnitt (60) dazu konfiguriert ist, den Magnettypmotorgenerator (MG) dahingehend zu steuern, eine Drehung der Kurbelwelle (15) unter Verwendung von Elektrizität aus der Elektrizitätsspeichervorrichtung (4), wobei der Verbrennungsvorgang des Motors (EG) gestoppt ist, zu starten, wobei
der Magnettypmotorgenerator (MG) dazu konfiguriert ist, der Kurbelwelle (15) ein Drehmoment zum Erhöhen der Drehzahl der Kurbelwelle (15) zuzuführen, und bevor die Drehzahl der Kurbelwelle (15) 2000 U/min erreicht, der Steuerabschnitt (60) dazu konfiguriert ist, dem Motor (EG) einen Kraftstoff zuzuführen, und den Verbrennungsvorgang des Motors (EG) startet, und
das angetriebene Bauglied (3b) dazu konfiguriert ist, mittels einer durch eine Verbrennung des Motors (EG) verursachten Leistung der Kurbelwelle (15) angetrieben zu werden, bevor die Drehzahl der Kurbelwelle (15) 2000 U/min erreicht, während einer Erhöhung der Drehzahl der Kurbelwelle (15).

2. Das Fahrzeug gemäß Anspruch 1, wobei
die Kupplung eine Kupplungsblockierdrehzahl von 3500 U/min oder mehr und 6700 U/min oder weniger aufweist.

3. Das Fahrzeug gemäß Anspruch 1 oder 2, wobei
der Magnettypmotorgenerator bewirkt, dass sich die Kurbelwelle dreht, bis die Drehzahl der Kurbelwelle eine Kupplungsblockierdrehzahl erreicht.

4. Das Fahrzeug gemäß einem der Ansprüche 1 bis 3, wobei
das angetriebene Bauglied (3b) dazu konfiguriert ist, bevor die Drehzahl der Kurbelwelle (15) während einer Erhöhung der Drehzahl der Kurbelwelle (15) 2000 U/min erreicht, sowohl durch eine Leistung der Kurbelwelle (15), die durch eine Verbrennung des Motors (EG) verursacht wird, und eine Leistung der Kurbelwelle (15), die durch einen Antrieb des Magnettypmotorgenerators (MG) verursacht wird, angetrieben zu werden.

5. Das Fahrzeug gemäß Anspruch 4, wobei
die Leistungsübertragungsvorrichtung (PT) dazu konfiguriert ist, eine Leistungsübertragung zwischen der Kurbelwelle (15) und dem angetriebenen Bauglied (3b) zu ermöglichen, nachdem der Verbrennungsvorgang des Motors (EG) gestartet wird, während einer Erhöhung der Drehzahl der Kurbelwelle (15), und bevor die Drehzahl der Kurbelwelle (15) 2000 U/min erreicht,
wobei dann, wenn die Drehzahl der Kurbelwelle (15) gleich null ist, der Motor (EG) gestoppt wird und keine Leistungsübertragung durch die Leistungsübertragungsvorrichtung (PT) ausgeführt wird, und wobei dann, wenn in diesem Zustand die Beschleunigerbedienungsvorrichtung (8) betätigt wird, um den Motor (EG) anzuweisen, eine Ausgabe zu tätigen, der Steuerabschnitt (60) dazu konfiguriert ist, den Magnettypmotorgenerator (MG) dahingehend zu steuern, eine Drehung der Kurbelwelle (15) unter Verwendung von Elektrizität aus der Elektrizitätsspeichervorrichtung (4), wobei der Verbrennungsvorgang des Motors (EG) gestoppt ist, zu starten, wobei der Magnettypmotorgenerator (MG) dazu konfiguriert ist, der Kurbelwelle (15) ein Drehmoment zum Erhöhen der Drehzahl der Kurbelwelle (15) zuzuführen,
und der Steuerabschnitt (60) dazu konfiguriert ist, bevor die Drehzahl der Kurbelwelle (15) 2000 U/min erreicht, dem Motor (EG) einen Kraftstoff zuzuführen, und den Verbrennungsvorgang des Motors (EG) startet, und
das angetriebene Bauglied (3b) dazu konfiguriert ist, durch eine Leistung der Kurbelwelle (15), die durch eine Verbrennung des Motors (EG) verursacht wird, und eine Leistung des Magnettypmotorgenerators (MG) angetrieben zu werden, nachdem den Verbrennungsvorgang des Motors (EG) gestartet wird, während einer Erhöhung der Drehzahl der Kurbelwelle (15) und bevor die Drehzahl der Kurbelwelle (15) 2000 U/min erreicht.

6. Das Fahrzeug gemäß Anspruch 5, wobei
der Leistungsübertragungsmechanismus (PT) dazu konfiguriert ist, eine Leistungsübertragung zwischen der Kurbelwelle (15) und dem angetriebenen Bauglied (3b) zu ermöglichen, bevor den Verbrennungsvorgang des Motors (EG) gestartet wird,
wobei dann, wenn die Drehzahl der Kurbelwelle (15) gleich null ist, der Motor (EG) gestoppt wird und keine Leistungsübertragung durch die Leistungsübertragungsvorrichtung (PT) ausgeführt wird, und wobei dann, wenn in diesem Zustand die Beschleunigerbedienungsvorrichtung (8) betätigt wird, um den Motor (EG) anzuweisen, eine Ausgabe zu tätigen, der Steuerabschnitt (60) dazu konfiguriert ist, den Magnettypmotorgenerator (MG) dahingehend zu steuern, eine Drehung der Kurbelwelle (15) unter Verwendung von Elektrizität aus der Elektrizitätsspeichervorrichtung (4), wobei der Verhrennungsvorgang des Motors (EG) gestoppt ist, zu starten, wobei der Magnettypmotorgenerator (MG) dazu konfiguriert ist, der Kurbelwelle (15) ein Drehmoment zum Erhöhen der Drehzahl der Kurbelwelle (15) zuzuführen,
und der Steuerabschnitt (60) dazu konfiguriert ist, bevor die Drehzahl der Kurbelwelle (15) 2000 U/min erreicht, während einer Erhöhung der Drehzahl der Kurbelwelle (15), dem Motor (EG) einen Kraftstoff zuzuführen, und den Verbrennungsvorgang des Motors (EG) startet, und
das angetriebene Bauglied (3b) dazu konfiguriert ist, durch eine Leistung der Kurbelwelle (15), die durch den Magnettypmotorgenerator (MG) verursacht wird, angetrieben zu werden, bevor der Verbrennungsvorgang des Motors (EG) gestartet wird, und sowohl durch eine Leistung der Kurbelwelle (15), die durch eine Verbrennung des Motors (EG) verursacht wird, und eine Leistung des Magnettypmotorgenerators (MG) angetrieben wird, nachdem der Verbrennungsvorgang des Motors (EG) gestartet wird und bevor die Drehzahl der Kurbelwelle (15) 2000 U/min erreicht.

7. Das Fahrzeug gemäß einem der Ansprüche 1 bis 6, wobei
der Leistungsübertragungsmechanismus (PT) dazu konfiguriert ist, eine Leistungsübertragung zwischen der Kurbelwelle (15) und dem angetriebenen Bauglied (3b) zu ermöglichen, bevor die Drehzahl der Kurbelwelle (15) eine Leerlauf-Ende-Drehzahl erreicht, während eine Erhöhung der Drehzahl der Kurbelwelle (15), wobei die Leerlauf-Ende-Drehzahl höher ist als eine Leerlaufdrehzahl und niedriger als 2000 U/min ist,
wobei dann, wenn die Drehzahl der Kurbelwelle (15) gleich null ist, der Motor (EG) gestoppt wird und keine Leistungsübertragung durch die Leistungsübertragungsvorrichtung (PT) ausgeführt wird, und wobei dann, wenn in diesem Zustand die Beschleunigerbedienungsvorrichtung (8) betätigt wird, um den Motor (EG) anzuweisen, eine Ausgabe zu tätigen, der Steuerabschnitt (60) dazu konfiguriert ist, den Magnettypmotorgenerator (MG) dahingehend zu steuern, eine Drehung der Kurbelwelle (15) unter Verwendung von Elektrizität aus der Elektrizitätsspeichervorrichtung (4), wobei der Verbrennungsvorgang des Motors (EG) gestoppt ist, zu starten, wobei der Magnettypmotorgenerator (MG) dazu konfiguriert ist, der Kurbelwelle (15) ein Drehmoment zum Erhöhen der Drehzahl der Kurbelwelle (15) zuzuführen, und der Steuerabschnitt (60) dazu konfiguriert ist, bevor die Drehzahl der Kurbelwelle (15) die Leerlauf-Ende-Drehzahl erreicht, während einer Erhöhung der Drehzahl der Kurbelwelle (15), dem Motor (EG) einen Kraftstoff zuzuführen, und den Verbrennungsvorgang des Motors (EG) startet, und
das angetriebene Bauglied (3b) dazu konfiguriert ist, durch eine Leistung der Kurbelwelle (15), die durch eine Verbrennung des Motors (EG) verursacht wird, angetrieben zu werden, bevor die Drehzahl der Kurbelwelle (15) die Leerlauf-Ende-Drehzahl erreicht, während einer Erhöhung der Drehzahl der Kurbelwelle (15).

8. Das Fahrzeug gemäß einem der Ansprüche 1 bis 7, wobei
der Steuerabschnitt (60) dazu konfiguriert ist, ansprechend auf eine Erfüllung einer vorbestimmten Leerlaufstoppbedingung den Verbrennungsvorgang des Motors (EG) zu stoppen, und, ansprechend darauf, dass die Beschleunigerbedienvorrichtung (8) bedient wird, um den Motor (EG) anzuweisen, eine Ausgabe zu tätigen, der Steuerabschnitt (60) dazu konfiguriert ist, den Magnettypmotorgenerator (MG) derart zu steuern, dass der Magnettypmotorgenerator (MG) bewirkt, dass sich die Kurbelwelle (15) unter Verwendung von Elektrizität in der Elektrizitätsspeichervorrichtung (4) dreht, wobei der Verbrennungsvorgang des Motors (EG) gestoppt ist, und dem Motor (EG) einen Kraftstoff zuführt und den Verbrennungsvorgang des Motors (EG) startet.

## Revendications

1. Véhicule, comprenant:
un moteur (EG) comportant un vilebrequin (15), le moteur (EG) étant configuré pour sortir de la puissance à travers le vilebrequin (15);
un moteur-générateur de type à aimant (MG) comportant un rotor (30) et un stator (40), le rotor (30) comportant un aimant permanent et étant connecté au vilebrequin (15) de sorte que la transmission de puissance entre le rotor (30) et le vilebrequin (15) soit permis sans interposition d'un embrayage et de sorte que le rotor (30) tourne à un rapport de vitesse fixe par rapport au vilebrequin (15), le stator (40) étant disposé opposé au rotor (30), le moteur-générateur de type à aimant (MG) étant configuré pour faire tourner le vilebrequin (15) au moins lors du démarrage d'une action de combustion du moteur (EG) et pour générer de l'électricité lorsqu'il est entraîné par le moteur (EG);
un dispositif d'accumulation d'électricité (4) configuré pour alimenter et recevoir de l'électricité vers le et du moteur-générateur de type à aimant (MG);
un actionneur d'accélérateur (8) configuré pour être actionné de manière à donner instruction au moteur (EG) de réaliser une sortie;
un élément entraîné (3b) configuré pour être entraîné par la puissance sortie du moteur (EG) pour amener le véhicule à se déplace en avant;
un dispositif de transmission de puissance (PT) configuré pour transmettre la puissance du vilebrequin (15) à l'élément entraîné (3b), le dispositif de transmission de puissance (PT) comportant un embrayage (CL); et
un segment de commande (60) configuré pour faire démarrer le moteur-générateur de type à aimant (MG) pour faire tourner le vilebrequin (15), et pour alimenter un carburant vers le moteur (EG) pour démarrer l'action de combustion du moteur (EG) tandis que tourne le vilebrequin (15),
**caractérisé par le fait que**
le véhicule est configuré pour s'incliner dans les virages,
le véhicule est configuré pour s'incliner, lorsqu'il prend un virage, vers l'intérieur d'une courbe pour opposer une force centrifuge agissant sur le véhicule au moment de virer,
le dispositif de transmission de puissance (PT) est configuré pour déconnecter la transmission de puissance lorsqu'une vitesse de rotation du vilebrequin (15) se situe dans une région de faible vitesse inférieure à 2000 tours par minute, pour permettre ensuite la transmission de puissance entre le vilebrequin (15) et l'élément entraîné (3b) avant qu'une vitesse de rotation du vilebrequin (15) n'atteigne 2000 tours par minute lorsque la vitesse de rotation du vilebrequin se situe en dehors de la région de faible vitesse pendant une augmentation de la vitesse de rotation du vilebrequin (15), indépendamment d'une action du motocycliste sur l'embrayage (CL), la région de faible vitesse présentant une valeur limite supérieure qui correspond à une vitesse de rotation d'embrayage dans l'embrayage,
dans lequel
lorsque la vitesse de rotation du vilebrequin (15) est nulle, le moteur (EG) est arrêté et il n'est pas réalisé de transmission de puissance par le dispositif de transmission de puissance (PT) et si, dans cet état, l'actionneur d'accélérateur (8) est actionné pour donner instruction au moteur (EG) de réaliser une sortie, le segment de commande (60) est configuré pour commander le moteur-générateur de type à aimant (MG) pour commencer à faire tourner le vilebrequin (15) à l'aide de l'électricité du dispositif d'accumulation d'électricité (4) avec l'action de combustion du moteur (EG) arrêtée,
dans lequel
le moteur-générateur de type à aimant (MG) est configuré pour fournir un couple au vilebrequin (15) pour augmenter la vitesse de rotation du vilebrequin (15), et
avant que la vitesse de rotation du vilebrequin (15) n'atteigne 2000 tours par minute, le segment de commande (60) est configuré pour alimenter un carburant vers le moteur (EG) et démarrer l'action de combustion du moteur (EG), et
l'élément entraîné (3b) est configuré pour être entraîné par la puissance du vilebrequin (15) provoquée par la combustion du moteur (EG) avant que la vitesse de rotation du vilebrequin (15) n'atteigne 2000 tours par minute lors d'une augmentation de la vitesse de rotation du vilebrequin (15).

2. Véhicule selon la revendication 1, dans lequel
l'embrayage présente une vitesse de rotation de blocage d'embrayage de 3500 tours par minute ou plus et de 6700 tours par minute ou moins.

3. Véhicule selon la revendication 1 ou 2, dans lequel
le moteur-générateur de type à aimant fait tourner le vilebrequin jusqu'à ce que la vitesse de rotation du vilebrequin atteigne une vitesse de rotation de blocage d'embrayage.

4. Véhicule selon l'une quelconque des revendications 1 à 3, dans lequel
avant que la vitesse de rotation du vilebrequin (15) n'atteigne 2000 tours par minute lors d'une augmentation de la vitesse de rotation du vilebrequin (15), l'élément entraîné (3b) est configuré pour être entraîné tant par la puissance du vilebrequin (15) provoquée par la combustion du moteur (EG) que par la puissance du vilebrequin (15) provoquée par l'entraînement du moteur-générateur de type à aimant (MG).

5. Véhicule selon la revendication 4, dans lequel
le dispositif de transmission de puissance (PT) est configuré pour permettre la transmission de puissance entre le vilebrequin (15) et l'élément entraîné (3b) après le démarrage de l'action de combustion du moteur (EG) lors d'une augmentation de la vitesse de rotation du vilebrequin (15) et avant que la vitesse de rotation du vilebrequin (15) n'atteigne 2000 tours par minute,
dans lequel
lorsque la vitesse de rotation du vilebrequin (15) est nulle, le moteur (EG) est arrêté et il n'est pas réalisé de transmission de puissance par le dispositif de transmission de puissance (PT) et si, dans cet état, l'actionneur d'accélérateur (8) est actionné pour donner instruction au moteur (EG) de réaliser une sortie, le segment de commande (60) est configuré pour commander le moteur-générateur de type à aimant (MG) pour commencer à faire tourner le vilebrequin (15) à l'aide de l'électricité du dispositif d'accumulation d'électricité (4) avec l'action de combustion du moteur (EG) arrêtée, où le moteur-générateur de type à aimant (MG) est configuré pour fournir un couple au vilebrequin (15) pour augmenter la vitesse de rotation du vilebrequin (15),
et avant que la vitesse de rotation du vilebrequin (15) n'atteigne 2000 tours par minute, le segment de commande (60) est configuré pour alimenter un carburant vers le moteur (EG) et démarrer l'action de combustion du moteur (EG), et
l'élément entraîné (3b) est configuré pour être entraîné tant par la puissance du vilebrequin (15) provoquée par la combustion du moteur (EG) et par la puissance du moteur-générateur de type à aimant (MG), après que soit démarrée l'action de combustion du moteur (EG) pendant une augmentation de la vitesse de rotation du vilebrequin (15) et avant que la vitesse de rotation du vilebrequin (15) n'atteigne 2000 tours par minute.

6. Véhicule selon la revendication 5, dans lequel
le dispositif de transmission de puissance (PT) est configuré pour permettre la transmission de puissance entre le vilebrequin (15) et l'élément entraîné (3b) avant que ne soit démarrée l'action de combustion du moteur (EG),
dans lequel, lorsque la vitesse de rotation du vilebrequin (15) est nulle, le moteur (EG) est arrêté et il n'est pas réalisé de transmission de puissance par le dispositif de transmission de puissance (PT) et si, dans cet état, l'actionneur d'accélérateur (8) est actionné pour donner instruction au moteur (EG) de réaliser une sortie, le segment de commande (60) est configuré pour commander le moteur-générateur de type à aimant (MG) pour commencer à faire tourner le vilebrequin (15) à l'aide de l'électricité du dispositif d'accumulation d'électricité (4) avec l'action de combustion du moteur (EG) arrêtée, dans lequel le moteur-générateur de type à aimant (MG) est configuré pour fournir un couple au vilebrequin (15) pour augmenter la vitesse de rotation du vilebrequin (15),
et avant que la vitesse de rotation du vilebrequin (15) n'atteigne 2000 tours par minute pendant une augmentation de la vitesse de rotation du vilebrequin (15), le segment de commande (60) est configuré pour alimenter un carburant vers le moteur (EG) et démarrer l'action de combustion du moteur (EG), et
l'élément entraîné (3b) est configuré pour être entraîné par la puissance du vilebrequin (15) provoquée par le moteur-générateur de type à aimant (MG) avant que ne soit démarrée l'action de combustion du moteur (EG), et est entraîné tant par la puissance du vilebrequin (15) provoquée par la combustion du moteur (EG) que par la puissance du moteur-générateur de type à aimant (MG) après que soit démarrée l'action de combustion du moteur (EG) et avant que la vitesse de rotation du vilebrequin (15) n'atteigne 2000 tours par minute.

7. Véhicule selon l'une quelconque des revendications 1 à 6, dans lequel
le dispositif de transmission de puissance (PT) est configuré pour permettre une transmission de puissance entre le vilebrequin (15) et l'élément entraîné (3b) avant que la vitesse de rotation du vilebrequin (15) n'atteigne une vitesse de rotation excessive au ralenti pendant une augmentation de la vitesse de rotation du vilebrequin (15), la vitesse de rotation excessive au ralenti étant supérieure à une vitesse de rotation au ralenti et inférieure à 2000 tours par minute,
dans lequel, lorsque la vitesse de rotation du vilebrequin (15) est nulle, le moteur (EG) est arrêté et il n'est pas réalisé de transmission de puissance par le dispositif de transmission de puissance (FT) et si, dans cet état, l'actionneur d'accélérateur (8) est actionné pour donner instruction au moteur (EG) de réaliser une sortie, le segment de commande (60) est configuré pour commander le moteur-générateur de type à aimant (MG) pour faire démarrer la rotation du vilebrequin (15) à l'aide l'électricité du dispositif d'accumulation d'électricité (4) avec l'action de combustion du moteur (EG) arrêtée, dans lequel le moteur-générateur de type à aimant (MG) est configuré pour fournir un couple au vilebrequin (15) pour augmenter la vitesse de rotation du vilebrequin (15),
et avant que la vitesse de rotation du vilebrequin (15) n'atteigne la vitesse de rotation excessive au ralenti pendant une augmentation de la vitesse de rotation du vilebrequin (15), le segment de commande (60) est configuré pour alimenter un carburant vers le moteur (EG) et démarrer l'action de combustion du moteur (EG), et
l'élément entraîné (3b) est configuré pour être entraîné par la puissance du vilebrequin (15) provoquée par la combustion du moteur (EG) avant que la vitesse de rotation du vilebrequin (15) n'atteigne la vitesse de rotation excessive au ralenti pendant une augmentation de la vitesse de rotation du vilebrequin (15).

8. Véhicule selon l'une quelconque des revendications 1 à 7, dans lequel
en réaction au fait que soit remplie une condition d'arrêt de ralenti prédéterminée, le segment de commande (60) est configuré pour arrêter l'action de combustion du moteur (EG), et en réaction au fait que l'actionneur d'accélérateur (8) est actionné de manière à donner instruction au moteur (EG) de réaliser une sortie, le segment de commande (60) est configuré pour commander le moteur-générateur de type à aimant (MG) de sorte que le moteur-générateur de type à aimant (MG) fasse tourner le vilebrequin (15) à l'aide de l'électricité dans le dispositif d'accumulation d'électricité (4) avec l'action de combustion du moteur (EG) arrêtée, et alimente un carburant vers le moteur (EG) et démarre l'action de combustion du moteur (EG).
